# DEMANDE DE BREVET EUROPEEN

(11) **EP 4 607 243 A1**
(43) Date de publication de la demande: **27.08.2025**
(21) Numéro de dépôt: 24220851.0
(22) Date de dépôt: 18.12.2024
(51) Int. Cl.: G01S 13/88, G01S 7/03, G01S 7/28, G01S 13/10, H01Q 1/28, H01Q 3/24, H01Q 21/06, H01Q 21/08, G01S 7/40

(54) **RADIOALTIMETRE POUR AERONEF AYANT UN ANGLE D OUVERTURE REGLABLE ET PROCEDE DE MESURE D'UNE HAUTEUR-SOL AU MOYEN DE CE RADIOALTIMETRE**

(30) Priorité: 23.02.2024 FR 2401788
(71) Demandeur: Airbus Helicopters, 13725 Marignane Cedex (FR)
(72) Inventeur: DUTRUC, Hervé, 13820 ENSUES LA REDONNE (FR)
(74) Mandataire: GPI Brevets

(57) **Abrégé**

La présente invention concerne un procédé de mesure de la hauteur-sol (*Hs*) d'un aéronef (30) au moyen d'un radioaltimètre (1) comportant une antenne émettrice (10) émettant un signal électromagnétique primaire (51,52), une antenne réceptrice (20) recevant un signal électromagnétique réfléchi (55,56) résultant d'une réflexion dudit signal électromagnétique primaire (51), et un calculateur (2). Ledit radioaltimètre (1) comporte une antenne réglable, parmi lesdites antennes émettrice (10) et réceptrice (20), munie d'un organe de traitement (80) et de plusieurs éléments rayonnants (11-19) séparés respectivement par un interstice (L) non nul. Ledit procédé comporte un réglage (100) d'un angle d'ouverture de ladite antenne réglable en connectant électriquement un ou plusieurs desdits éléments rayonnants (11-19) audit organe de traitement (80), et après ledit réglage (100), une détermination (300) d'une hauteur-sol (*Hs*) en fonction d'un temps écoulé minimal entre une émission (310) dudit signal électromagnétique primaire (51) et une réception (320) dudit signal électromagnétique réfléchi (55).

## Description

La présente invention se situe dans le domaine technique des instruments équipant les aéronefs, et plus particulièrement les instruments de mesure de la hauteur-sol d'un aéronef, à savoir la distance la plus courte entre cet aéronef et la surface survolée.

La présente invention concerne un procédé de mesure de la hauteur-sol d'un aéronef au moyen d'un radioaltimètre ayant un angle d'ouverture réglable, ainsi qu'un radioaltimètre pour aéronef mettant en oeuvre un tel procédé et un aéronef équipé d'un tel radioaltimètre.

Un radioaltimètre met en oeuvre un couple d'antennes, dont une antenne émettrice d'un signal électromagnétique primaire et une antenne réceptrice captant un signal électromagnétique réfléchi résultant d'une réflexion de ce signal électromagnétique primaire sur la surface survolée. L'expression « surface survolée » désigne toute surface, tel que le sol, une surface d'eau, une surface d'un navire ou d'un bâtiment, etc. Eventuellement, l'antenne émettrice et l'antenne réceptrice peuvent être confondues pour former une seule et même antenne.

La hauteur-sol de l'aéronef est déterminée par un calculateur du radioaltimètre en divisant le temps écoulé entre l'émission du signal électromagnétique primaire et la réception du signal électromagnétique réfléchi par le double de la vitesse de propagation du signal électromagnétique dans l'air. Dans un souci de sécurité pour l'aéronef, le radioaltimètre prend en compte la durée de trajet la plus courte mesurée, ce qui correspond dans la majorité des cas à la hauteur minimale en dessous de l'aéronef, définie selon une direction verticale, à savoir parallèle à la direction de la gravité terrestre.

Les antennes du radioaltimètre sont positionnées de manière à éviter une réflexion du signal électromagnétique contre des éléments de l'aéronef. C'est pourquoi les antennes sont classiquement implantées au niveau d'une face inférieure de l'aéronef. Par ailleurs, les antennes du radioaltimètre sont communément protégées de l'environnement extérieur à l'aéronef, les intempéries notamment, par un radôme, typiquement agencé en coupole transparente aux ondes électromagnétiques.

Cependant, les aéronefs peuvent être occasionnellement exploités pour des missions de vol spécifiques nécessitant l'emport d'équipements additionnels ou d'une charge portée par un système d'élingage. Dans ce contexte, il peut se poser le problème d'une possible réflexion du signal électromagnétique primaire par un de ces équipements additionnels ou par la charge transportée par élingage, qui est de plus ballante sous l'aéronef. Une telle réflexion a pour conséquence de fausser la mesure de la hauteur-sol fournie par le radioaltimètre. En particulier, une réflexion des signaux électromagnétiques sur un équipement additionnel peut provoquer l'émission par le radioaltimètre d'une hauteur-sol très faible, voire nulle.

De plus, le risque de réflexion du signal électromagnétique primaire du radioaltimètre sur un des équipements additionnels ou sur une charge transportée par élingage est accru pour un aéronef de taille modérée, dû notamment à la faible surface disponible sous l'aéronef pour implanter d'une part les antennes émettrice et réceptrice du radioaltimètre et, d'autre part, des équipements additionnels par exemple.

Le risque de réflexion du signal électromagnétique primaire sur une charge transportée par élingage est connu de longue date. Une solution classiquement utilisée pour éviter ce risque consiste à implanter à bord de l'aéronef des antennes dites « cornet » qui émettent un signal électromagnétique primaire dans un cône présentant un angle d'ouverture réduit.

L'angle d'ouverture, désigné également « cône d'ouverture », relatif à l'émission d'un signal par une antenne est défini par la région angulaire couverte par ce signal, de part et d'autre d'un axe central de cette antenne. Il est d'usage de caractériser cet angle d'ouverture par les directions pour lesquelles la puissance rayonnée de ce signal est égale à la moitié, correspondant alors à -3 décibels (-3 dB), de la puissance rayonnée du même signal dans la direction la plus favorable qui est l'axe du lobe principal de ce signal, et correspondant généralement à l'axe central de l'antenne émettrice. En première approximation, lorsque nous comparons les performances entre plusieurs radio-altimètres, on considère en effet qu'un signal dont la puissance rayonnée est inférieure à la moitié de la puissance rayonnée du même signal dans la direction la plus favorable ne permet pas d'obtenir une mesure et n'est donc pas utilisable.

En outre, le champ de mesure correspond à la projection de cet angle d'ouverture sur la surface survolée.

Bien qu'efficace, une telle solution présente l'inconvénient de réduire notablement la capacité de mesure de la hauteur-sol du radioaltimètre lors de la prise de virages à fortes inclinaisons par l'aéronef, en roulis notamment.

Une autre solution relative à l'utilisation d'une charge transportée par élingage est décrite dans le document EP 3002604 et consiste en un radioaltimètre équipé d'antennes planes et d'une lentille modifiant l'angle d'ouverture relatif à l'émission d'un signal par ces antennes afin d'en exclure la charge transportée. Une telle solution peut également être utilisée pour éviter une réflexion du signal électromagnétique primaire sur un équipement additionnel fixé sous l'aéronef.

Une autre solution consiste à choisir les antennes du radioaltimètre parmi un jeu d'antennes interchangeables pour adapter le champ de mesure du radioaltimètre aux missions. Cependant, de telles opérations de remplacement d'antennes sont coûteuses et malaisées à effectuer, et finalement sont peu exploitées dans la pratique.

Par suite, vu le caractère occasionnel des missions de vol d'un aéronef relevant du transport de charge par élingage, il est traditionnel de monter à bord des aéronefs des antennes de configuration plane procurant un champ de mesure du radioaltimètre maximal. De telles dispositions permettent en effet de fournir au pilote de l'aéronef une information fiable relative à la hauteur-sol de l'aéronef pour la plupart des missions de l'aéronef, excluant le transport de charge par élingage. Par contre, le radioaltimètre est alors parfois mis hors service par l'équipage de l'aéronef en cas de transport de charge par élingage, voire d'équipements additionnels fixés sous l'aéronef risquant de perturber la mesure de hauteur-sol.

Par ailleurs, le document EP 3121902 décrit un système de radioaltimètre dont l'antenne comprend au moins deux réseaux d'éléments rayonnants aptes à rayonner dans deux bandes de fréquences distinctes. De plus, une pluralité d'éléments d'activation permet d'activer et/ou de désactiver chacun des premier réseau et deuxième réseau d'éléments rayonnants en fonction d'une valeur d'ouverture d'antenne choisie afin de réduire la surface ciblée par les ondes radioélectriques émises et par suite, d'améliorer la précision de la mesure de hauteur.

Le document US 6750807 divulgue un altimètre radar comprenant un émetteur, un récepteur , et au moins une antenne couplée à l'émetteur et/ou au récepteur. L'altimètre comprend également une autre antenne à ondes millimétriques mobile et un convertisseur de fréquence haut/bas couplé à l'antenne à ondes millimétriques, à l'émetteur et au récepteur.

Enfin, le document CN 117572413 décrit un système et un procédé de mesure de la hauteur du niveau de la mer dont l'antenne comprend une antenne émettrice, une antenne réceptrice, un ensemble de réception/transmission, un ensemble de traitement de données et un ensemble d'alimentation. L'antenne émettrice et l'antenne réceptrice utilisent deux réseaux d'antennes différents.

La présente invention a alors pour but de proposer une solution alternative pour mesurer la hauteur-sol d'un aéronef en vol permettant de s'affranchir des limitations mentionnées ci-dessus afin de fournir une mesure fiable de cette hauteur-sol, indépendamment de la configuration du ou des équipements additionnels fixés sous l'aéronef. La présente invention vise ainsi un procédé de mesure de la hauteur-sol d'un aéronef au moyen d'un radioaltimètre ayant un angle d'ouverture réglable ainsi qu'un tel radioaltimètre mettant en oeuvre ce procédé. La présente invention vise également un aéronef muni d'un tel radioaltimètre.

La présente invention a tout d'abord pour objet un procédé de mesure de la hauteur-sol Hs d'un aéronef au moyen d'un radioaltimètre comportant une antenne émettrice munie d'une source générant un signal électromagnétique primaire, une antenne réceptrice munie d'un récepteur apte à recevoir un signal électromagnétique réfléchi résultant d'une réflexion du signal électromagnétique primaire, et un calculateur.

Ce procédé est remarquable en ce que le radioaltimètre comporte une antenne réglable parmi l'antenne émettrice et l'antenne réceptrice, l'antenne réglable étant munie d'au moins deux éléments rayonnants et d'un organe de traitement, deux éléments rayonnants adjacents étant séparés par un interstice non nul, l'organe de traitement comportant la source lorsque l'antenne réglable est l'antenne émettrice ou le récepteur lorsque l'antenne réglable est l'antenne réceptrice.

Le procédé comporte alors les étapes principales suivantes :
- un réglage d'un angle d'ouverture de cette antenne réglable parmi l'antenne émettrice et l'antenne réceptrice en connectant électriquement à cet organe de traitement un ou des éléments rayonnants parmi lesdits éléments rayonnants, et
- après le réglage, une détermination d'une hauteur-sol Hs en fonction d'un temps écoulé minimal entre une émission du signal électromagnétique primaire et une réception du signal électromagnétique réfléchi.

De la sorte, le procédé selon l'invention permet dans un premier temps la réalisation d'un réglage de l'angle d'ouverture de l'antenne réglable afin d'adapter cet angle d'ouverture aux conditions de vol de l'aéronef, et en particulier à la présence d'équipements disposés sous l'aéronef. Ce réglage permet une mesure correcte et fiable de la hauteur-sol Hs d'un aéronef, en évitant notamment la réflexion du signal électromagnétique primaire sur un de ces équipements. Ce réglage de l'angle d'ouverture est effectué en connectant électriquement un nombre adapté d'éléments rayonnants à l'organe de traitement.

Les éléments rayonnants comportent un matériau électriquement conducteur, par exemple un matériau métallique. Les éléments rayonnants peuvent adopter la forme de tous les types d'antennes connues, par exemple plane, filaire, ou autres.

Lorsque l'antenne réglable est l'antenne émettrice, le réglage de l'angle d'ouverture est relatif à l'émission du signal électromagnétique primaire et effectué en connectant électriquement un nombre adapté d'éléments rayonnants à la source de l'antenne émettrice pour adapter la forme du signal électromagnétique primaire émis. Le signal électromagnétique primaire est généré par la source, puis transmis à un ou à plusieurs éléments rayonnants connectés électriquement à la source, ce ou ces éléments rayonnants émettant alors le signal électromagnétique primaire vers l'environnement extérieur à l'antenne émettrice, et en particulier vers la surface survolée par l'aéronef. L'utilisation d'un seul ou de plusieurs éléments rayonnants séparés par un interstice non nul permet avantageusement à l'antenne émettrice de modifier son angle d'ouverture, et par suite, la surface survolée balayée par le signal électromagnétique primaire. Cet angle d'ouverture se réduit en particulier lorsque le nombre éléments rayonnants connectés électriquement à la source augmente. Cet angle d'ouverture est ainsi maximal lorsqu'un unique élément rayonnant est connecté électriquement à la source.

Lorsqu'au moins deux éléments rayonnants sont connectés électriquement à la source, la source transmet de préférence un signal électromagnétique primaire ayant une même phase et une même amplitude à chaque élément rayonnant connecté électriquement à la source, voire le même signal électromagnétique primaire. Alternativement, un ajustement de la phase et de l'amplitude peut également être appliqué au signal électromagnétique primaire pour chaque élément rayonnant connecté électriquement à la source, par exemple en fonction des positions relatives de ces éléments rayonnants.

Lorsque l'antenne réglable est l'antenne réceptrice, le réglage de l'angle d'ouverture est relatif à la réception du signal électromagnétique réfléchi résultant d'une réflexion du signal électromagnétique primaire et est effectué en connectant électriquement un nombre adapté d'éléments rayonnants au récepteur de l'antenne réceptrice pour adapter l'angle d'ouverture selon lequel le signal électromagnétique réfléchi peut être capté. Le signal électromagnétique réfléchi est ainsi capté par le ou les éléments rayonnants connectés électriquement au récepteur de l'antenne réceptrice, puis transmis à ce récepteur. L'utilisation d'un seul ou de plusieurs éléments rayonnants séparés par un interstice non nul permet avantageusement à l'antenne réceptrice de modifier son angle d'ouverture, et par suite, la surface survolée susceptible de réfléchir et de renvoyer le signal électromagnétique primaire vers l'antenne réceptrice. Cet angle d'ouverture se réduit en particulier lorsque le nombre éléments rayonnants connectés électriquement au récepteur augmente. Cet angle d'ouverture est ainsi maximal lorsqu'un unique élément rayonnant est connecté électriquement au récepteur.

La connexion électrique d'un ou de plusieurs éléments rayonnants à l'organe de traitement de l'antenne réglable peut être réalisée par l'intermédiaire de connecteurs reliant électriquement l'organe de traitement respectivement aux éléments rayonnants. Chaque connecteur peut être piloté indépendamment des autres connecteurs par le calculateur afin d'ouvrir ou de fermer la liaison électrique reliant un élément rayonnant à l'organe de traitement.

Le ou les équipements disposés sur la face inférieure de l'aéronef, et en particulier sur la face inférieure d'une cellule de l'aéronef, comportent par exemple un train d'atterrissage, un radar, une caméra, un projecteur ou tout autre équipement susceptible d'être utilisé par un aéronef. L'antenne émettrice et l'antenne réceptrice sont également susceptibles d'être positionnées sur la face inférieure de la cellule de l'aéronef.

Ensuite, la détermination d'une hauteur-sol Hs est réalisée de façon fiable et usuelle en utilisant le ou les éléments rayonnants connectés électriquement à l'organe de traitement lors du réglage de l'angle d'ouverture pour par exemple transmettre le signal électromagnétique primaire en dehors de l'antenne émettrice. Par exemple, les étapes suivantes sont réalisées :
- émission du signal électromagnétique primaire par l'antenne émettrice,
- réception par l'antenne réceptrice du signal électromagnétique réfléchi résultant d'une réflexion du signal électromagnétique primaire, et
- calcul par le calculateur de la hauteur-sol en fonction d'un temps écoulé minimal entre l'émission du signal électromagnétique primaire et la réception du signal électromagnétique réfléchi.

Le procédé selon l'invention peut comprendre une ou plusieurs des caractéristiques suivantes, prises seules ou en combinaison.

Selon une possibilité, les éléments rayonnants susceptibles d'être connectés électriquement à l'organe de traitement peuvent être disposés selon une unique rangée. Les éléments rayonnants sont donc alignés selon cette unique rangée, qui est par exemple orientée selon une direction longitudinale ou une direction transversale de l'aéronef.

En conséquence, l'angle d'ouverture de l'antenne réglable peut être adapté lors de l'étape de réglage uniquement selon la direction de cette rangée d'éléments rayonnant. Par exemple, le signal électromagnétique primaire émis par l'antenne émettrice, qui est l'antenne réglable, peut alors former un cône à base circulaire lorsqu'un unique élément rayonnant est connecté électriquement à l'organe de traitement, dans ce cas la source. Ce signal électromagnétique primaire peut aussi prendre la forme d'un cône à base sensiblement ovale ou oblongue lorsque plusieurs éléments rayonnants sont connectés électriquement à l'organe de traitement.

Une réduction de l'angle d'ouverture obtenue en connectant électriquement plusieurs éléments rayonnant à l'organe de traitement peut ainsi permettre au signal électromagnétique primaire d'éviter un équipement situé par exemple dans le prolongement de cette rangée d'éléments rayonnant.

Alternativement, les éléments rayonnants peuvent être disposés respectivement selon au moins deux rangées. Chaque rangée peut comporter un nombre d'éléments rayonnants égal au nombre de rangées, les éléments rayonnants formant éventuellement un carré. Chaque rangée peut aussi comporter un nombre d'éléments rayonnants différent du nombre de rangées, les éléments rayonnants formant éventuellement un rectangle.

De la sorte, l'angle d'ouverture de l'antenne réglable peut être adapté lors de l'étape de réglage selon plusieurs directions distinctes. Par exemple, le signal électromagnétique primaire émis par l'antenne émettrice, qui est l'antenne réglable, peut éventuellement former un cône à base circulaire lorsque le nombre de rangées dans lesquelles des éléments rayonnants sont connectés électriquement à l'organe de traitement est égal au nombre d'éléments rayonnants de ces rangées connectés électriquement l'organe de traitement. Ce signal électromagnétique primaire peut aussi prendre la forme d'un cône avec des bases différentes, par exemple, ovale ou oblongue lorsque le nombre de rangée dans lesquelles des éléments rayonnants sont connectés électriquement à l'organe de traitement est différent du nombre d'éléments rayonnants de ces rangées connectés électriquement à l'organe de traitement.

Une réduction de l'angle d'ouverture obtenue en connectant électriquement plusieurs éléments rayonnants à l'organe de traitement peut ainsi permettre au signal électromagnétique primaire d'éviter des équipements situés autour de l'antenne émettrice, et en particulier plusieurs équipements situés dans des directions différentes.

Par exemple, une disposition en carré des éléments rayonnants permet d'optimiser l'ouverture angulaire selon plusieurs directions, notamment selon les axes longitudinal et transversal de l'aéronef, afin de s'affranchir par exemple de la présence d'un train d'atterrissage fixe, situé transversalement de part et d'autre de l'antenne émettrice, et de l'implantation d'un phare, d'une caméra et/ou un radar situés longitudinalement devant ou derrière l'antenne émettrice.

Selon une possibilité compatible avec les précédentes, le réglage d'un angle d'ouverture peut comporter une commande d'au moins un connecteur parmi des connecteurs reliant électriquement l'organe de traitement respectivement aux éléments rayonnants, une telle commande étant effectuée par un opérateur à l'aide d'une interface homme-machine.

En effet, le ou les éléments rayonnants à connecter électriquement à l'organe de traitement peuvent être préalablement définis en fonction du ou des équipements fixés sous l'aéronef. Ce ou ces éléments rayonnants à connecter électriquement à l'organe de traitement peuvent avoir été déterminés par essais ou par simulations, voire suite à un précédent vol de l'aéronef.

Un opérateur peut alors solliciter l'interface homme-machine pour sélectionner directement le ou les éléments rayonnants à relier électriquement à l'organe de traitement en fonction du besoin, le calculateur pilotant en conséquence le ou les connecteurs correspondants afin de le ou les fermer électriquement. Cet opérateur peut être un pilote ou un copilote de l'aéronef. Cet opérateur peut être situé à l'intérieur de l'aéronef. Alternativement, l'opérateur peut être situé en dehors de l'aéronef, et le piloter ainsi à distance. Dans ce dernier cas, l'aéronef peut être un drone.

L'interface homme-machine peut aussi permettre de sélectionner une configuration porteuse du ou des équipements installés sur ou portés par l'aéronef, le calculateur pilotant en conséquence le ou les connecteurs associés à cette configuration. Le calculateur comporte alors une mémoire dans laquelle sont stockées des informations permettant d'associer à chacune des configurations connues un ou plusieurs connecteurs à fermer électriquement.

L'interface homme-machine peut encore permettre de sélectionner un ou plusieurs équipements installés sur ou portés par l'aéronef ainsi que leurs positions respectives, le calculateur pilotant en conséquence le ou les connecteurs correspondants associés aux équipements et aux positions respectives sélectionnés. Le calculateur comporte alors une mémoire dans laquelle sont stockées des informations permettant d'associer à différentes configurations d'équipements et de positions un ou plusieurs connecteurs à fermer électriquement. Un message peut être transmis à l'opérateur si la configuration d'équipements et de positions sélectionnée n'est pas connue.

Quel que soit le mode de réalisation précédemment cité, l'interface homme-machine peut être sélectionné au sol, avant le décollage de l'aéronef, ou en vol.

Alternativement, le réglage d'un angle d'ouverture peut être réalisé automatiquement à l'aide du calculateur afin de régler et d'adapter automatiquement l'angle d'ouverture de l'antenne réglable en fonction du ou des équipements installés sur ou portés par l'aéronef, et en particulier sous la cellule de l'aéronef.

Plusieurs variantes de ce réglage automatique d'un angle d'ouverture de l'antenne réglable sont envisageables. Selon toutes ces variantes, le réglage de cet angle d'ouverture comporte tout d'abord une connexion initiale électriquement à l'organe de traitement d'un unique élément rayonnant parmi les éléments rayonnants. Le calculateur pilote, lors de cette connexion initiale, d'une part la fermeture d'un seul connecteur, et d'autre part l'ouverture ou le maintien en position ouverte des autres connecteurs. De la sorte, lorsque l'antenne réglable est l'antenne émettrice, le signal électromagnétique primaire généré par la source est émis en dehors de l'antenne émettrice par cet unique élément rayonnant connecté à la source. Alternativement, lorsque l'antenne réglable est l'antenne réceptrice, le signal électromagnétique réfléchi est capté par cet unique élément rayonnant connecté au récepteur, puis transmis au récepteur.

Ensuite, le réglage comporte une phase de test comprenant l'émission d'au moins un signal électromagnétique, la réception d'au moins un signal électromagnétique réfléchi, et une analyse dudit au moins un signal électromagnétique réfléchi pour déterminer si un élément rayonnant additionnel doit être relié à l'organe de traitement. Le cas échéant, un élément rayonnant additionnel est relié à l'organe de traitement et une nouvelle phase de test est entreprise jusqu'à ce que le test soit jugé satisfaisant.

Selon une première variante de l'invention, au moins une itération de réglage est réalisée, et chaque itération peut comporter les étapes suivantes :
- émission initiale par l'antenne émettrice d'un signal électromagnétique primaire calibré de puissance connue vers au moins un panneau en matériau absorbant les ondes électromagnétiques situé au sol, à une distance prédéterminée de l'antenne émettrice,
- réception initiale par l'antenne réceptrice d'un signal électromagnétique calibré réfléchi,
- mesure initiale d'une puissance reçue du signal électromagnétique calibré réfléchi,
- comparaison initiale de la puissance reçue avec un seuil initial, et
- si la puissance reçue est supérieure ou égale au seuil initial, nouvelle connexion à l'organe de traitement d'un élément rayonnant additionnel parmi les éléments rayonnants.

Suite à cette nouvelle connexion, une nouvelle itération de réglage est réalisée et répétée jusqu'à ce que la puissance reçue soit inférieure au seuil initial.

Ainsi, cette première variante peut être réalisée au sol, par exemple suite à l'installation des équipements sous l'aéronef, voire juste avant le décollage de l'aéronef.

Le signal électromagnétique calibré réfléchi peut être issu d'une réflexion du signal électromagnétique primaire calibré sur le panneau, posé au sol sous l'aéronef, ou sur un équipement installé sur ou porté par l'aéronef. La distance entre le panneau et l'antenne émettrice est connue.

Les caractéristiques d'absorption des ondes électromagnétiques de ce panneau étant connues, la puissance du signal électromagnétique calibré réfléchi issu d'une réflexion uniquement sur le panneau peut être estimée, par exemple en fonction de la puissance du signal électromagnétique primaire calibré, de la distance entre le panneau et les antennes émettrice et réceptrice, ainsi que ces caractéristiques d'absorption des ondes électromagnétiques de ce panneau.

Le seuil initial peut alors être égal à cette puissance du signal électromagnétique calibré réfléchi estimée, éventuellement en prenant en compte une première marge de sécurité.

Le seuil initial peut alternativement être égal à un pourcentage de la puissance connue du signal électromagnétique primaire calibré émis par l'antenne émettrice. Ce pourcentage est inférieur à cent, et peut être déterminé en fonction d'au moins une caractéristique du panneau en matériau absorbant, tel que son taux d'absorption des ondes électromagnétiques, et de la distance entre l'antenne émettrice et le panneau, voire éventuellement de la première marge de sécurité à cette puissance.

Ainsi, si la puissance reçue est inférieure à ce seuil initial, on peut en déduire que le signal électromagnétique primaire calibré a effectivement été réfléchi uniquement par le panneau. L'angle d'ouverture de l'antenne réglable est alors compatible avec le ou les équipements installés sur ou porté par l'aéronef. La détermination de la hauteur-sol Hs par le radioaltimètre peut alors être considérée comme fiable dans ces conditions. Aucune itération de réglage complémentaire n'est donc nécessaire. Un message de validation de cet angle d'ouverture peut être émis, à l'aide par exemple d'un afficheur de l'aéronef, à l'attention d'un opérateur.

A contrario, si la puissance reçue est supérieure ou égale à ce seuil initial, on peut en déduire que le signal électromagnétique primaire calibré a été réfléchi au moins partiellement par un équipement installé sur ou porté par l'aéronef. L'angle d'ouverture est donc incompatible avec le ou les équipements installés sur ou portés par l'aéronef.

Une nouvelle connexion à l'organe de traitement d'un élément rayonnant additionnel parmi les éléments rayonnants est donc réalisée, par exemple selon un ordre prédéterminé. L'élément rayonnant additionnel connecté à l'organe de traitement est en général un élément rayonnant adjacent à un élément rayonnant qui est déjà connecté à l'organe de traitement. Alternativement, lorsque l'antenne réglable comporte plusieurs rangées d'éléments rayonnants, si l'équipement de l'aéronef jugé responsable de la réflexion parasite fait face aux éléments rayonnants d'une rangée, à savoir se situe à la verticale de ces éléments rayonnants, qui sont situés sensiblement horizontalement, c'est un élément rayonnant d'une autre rangée qui est ajouté. Si par contre, cet équipement parasite est aligné avec les éléments rayonnants d'une rangée, à savoir se situe dans le prolongement de cette rangée, mais ne lui fait pas face, c'est un élément rayonnant de cette même rangée qui est ajouté.

Ensuite, une nouvelle itération de réglage est réalisée. L'itération de réglage se répète tant que la puissance reçue est supérieure ou égale au seuil initial.

Selon une deuxième variante de l'invention, suite à la connexion initiale, une première mesure d'une première puissance reçue du signal électromagnétique réfléchi est effectuée avant décollage de l'aéronef.

Ensuite, au moins une itération de réglage est réalisée et peut comporter les étapes suivantes :
- deuxième mesure d'une deuxième puissance reçue du signal électromagnétique réfléchi après décollage de l'aéronef,
- comparaison de la première puissance reçue et de la deuxième puissance reçue,
- si une différence entre la première puissance reçue et la deuxième puissance reçue est inférieure ou égale à une valeur prédéterminée, nouvelle connexion à l'organe de traitement d'un élément rayonnant additionnel parmi les éléments rayonnants.

Suite à cette nouvelle connexion, une nouvelle itération de réglage est réalisée et répétée jusqu'à ce que la différence entre la première puissance reçue et la deuxième puissance reçue soit supérieure à la valeur prédéterminée.

Ainsi, cette deuxième variante est réalisée en partie au sol et en partie en vol, ladite au moins une itération de réglage étant réalisée après le décollage de l'aéronef. Seules la connexion initiale et la première mesure sont réalisées au sol.

Que ce soit avant ou après décollage, le signal électromagnétique réfléchi peut être issu d'une réflexion du signal électromagnétique primaire sur la surface survolée par l'aéronef ou sur un équipement installé sur ou porté par l'aéronef. La puissance du signal électromagnétique primaire émis par l'antenne émettrice est sensiblement constante lorsque la hauteur-sol Hs est faible.

Dès lors, après décollage, la puissance du signal électromagnétique réfléchi issu d'une réflexion du signal électromagnétique primaire sur la surface survolée par l'aéronef diminue lorsque la hauteur-sol *Hs* de l'aéronef augmente.

En conséquence, si la première puissance reçue et la deuxième puissance reçue sont sensiblement identiques ou proches, on peut en déduire que le signal électromagnétique primaire a été réfléchi au moins partiellement par un équipement installé sur ou porté par l'aéronef. L'angle d'ouverture de l'antenne réglable est donc incompatible avec le ou les équipements installés sur ou portés par l'aéronef. La détermination de la hauteur-sol Hs par le radioaltimètre ne peut donc pas être considérée comme fiable dans ces conditions.

A contrario, si cette première puissance reçue et cette deuxième puissance reçue sont significativement différentes, on peut en déduire que le signal électromagnétique primaire a été réfléchi uniquement par la surface survolée. L'angle d'ouverture de l'antenne réglable est alors compatible avec le ou les équipements installés sur ou portés par l'aéronef. La détermination de la hauteur-sol Hs par le radioaltimètre peut alors être considérée comme fiable dans ces conditions. Aucune itération de réglage complémentaire n'est donc nécessaire. Un message de validation de cet angle d'ouverture peut être émis, à l'aide par exemple d'un afficheur de l'aéronef, à l'attention d'un opérateur.

Par suite, afin de prendre en compte une deuxième marge de sécurité dans le cadre de l'invention, on peut considérer que le signal électromagnétique primaire a été réfléchi au moins partiellement par un équipement installé sur ou porté par l'aéronef lorsque la différence entre la première puissance reçue et la deuxième puissance reçue est inférieure ou égale à une valeur prédéterminée non nulle, la valeur prédéterminée étant par exemple sensiblement égale à la deuxième marge de sécurité.

Une nouvelle connexion à l'organe de traitement d'un élément rayonnant additionnel est alors réalisée, par exemple selon un ordre prédéterminé. L'élément rayonnant additionnel connecté à l'organe de traitement peut être par exemple un élément rayonnant adjacent à un élément rayonnant qui est déjà connecté à l'organe de traitement, ou un élément rayonnant d'une rangée alignée avec l'équipement incriminé, comme pour la première variante.

Ensuite, une nouvelle itération de réglage est réalisée, et ainsi de suite jusqu'à ce que la différence entre la première puissance reçue et de la deuxième puissance reçue soit supérieure à la valeur prédéterminée.

La deuxième mesure de la deuxième puissance reçue du signal électromagnétique réfléchi sur l'antenne réceptrice après décollage de l'aéronef peut être effectuée sur commande d'un opérateur à l'aide d'une interface homme-machine ou automatiquement dès que l'aéronef s'est élevé d'une hauteur courante supérieure ou égale à une hauteur prédéterminée. La hauteur courante peut être déterminée à l'aide d'un altimètre de l'aéronef.

Selon une troisième variante de l'invention, suite à la connexion initiale, au moins une itération de réglage est réalisée et peut comporter les étapes suivantes :
- mesure de réglage d'une puissance reçue du signal électromagnétique réfléchi sur l'antenne réceptrice après décollage de l'aéronef,
- comparaison de la puissance reçue avec un seuil de puissance,
- si la puissance reçue est supérieure ou égale au seuil de puissance, nouvelle connexion à l'organe de traitement d'un élément rayonnant additionnel parmi les éléments rayonnants.

Suite à cette nouvelle connexion, une nouvelle itération de réglage est réalisée et répétée jusqu'à ce que la puissance reçue soit inférieure au seuil de puissance.

Ainsi, cette troisième variante est réalisée en partie au sol et en partie en vol, ladite au moins une itération de réglage étant réalisée après le décollage de l'aéronef. Seule la connexion initiale est réalisée au sol, avant le décollage de l'aéronef.

Cette troisième variante est proche de la deuxième variante. Toutefois, la puissance reçue du signal électromagnétique réfléchi sur l'antenne réceptrice après décollage de l'aéronef n'est pas comparée à une première puissance reçue du signal électromagnétique réfléchi par l'antenne réceptrice avant le décollage, mais à un seuil de puissance prédéterminé. Aucune opération autre que la connexion électrique initiale à l'organe de traitement d'un unique élément rayonnant n'est avantageusement nécessaire avant le décollage de l'aéronef.

Le seuil de puissance peut être déterminé par calculs, essais ou simulation. Le seuil de puissance est, par exemple, égal à la puissance du signal électromagnétique réfléchi issu d'une réflexion sur le sol lorsque l'aéronef est au sol, auquel est éventuellement soustraite une troisième marge de sécurité. Le seuil de puissance peut être déterminé dans ce cas en s'assurant que le signal électromagnétique primaire est effectivement réfléchi uniquement par le sol, et qu'aucune réflexion de ce signal électromagnétique primaire ne se produit sur un équipement fixé sous l'aéronef.

En conséquence, si la puissance reçue, est inférieure à ce seuil de puissance, on peut en déduire que le signal électromagnétique primaire a effectivement été réfléchi uniquement par la surface survolée. L'angle d'ouverture de l'antenne réglable est compatible avec le ou les équipements installés sur ou portés par l'aéronef. La détermination de la hauteur-sol *Hs* par le radioaltimètre peut alors être considérée comme fiable dans ces conditions. Aucune itération de réglage complémentaire n'est donc nécessaire. Un message de validation de cet angle d'ouverture peut être émis, à l'aide par exemple d'un afficheur de l'aéronef, à l'attention d'un opérateur.

A contrario, si la puissance reçue est supérieure ou égale à ce seuil de puissance, on peut en déduire que le signal électromagnétique primaire a été réfléchi au moins partiellement par un équipement installé sur ou porté par l'aéronef. L'angle d'ouverture de l'antenne réglable est donc incompatible avec le ou les équipements installés sur ou portés par l'aéronef. La détermination de la hauteur-sol Hs par le radioaltimètre ne peut donc pas être considérée comme fiable dans ces conditions.

Une nouvelle connexion à l'organe de traitement d'un élément rayonnant additionnel parmi les éléments rayonnants est donc réalisée, par exemple selon un ordre prédéterminé. L'élément rayonnant additionnel connecté à l'organe de traitement peut être défini comme pour les variantes précédentes.

Ensuite, une nouvelle itération de réglage est réalisée, et ainsi de suite jusqu'à ce que la puissance reçue soit inférieure au seuil de puissance.

La mesure de réglage de la puissance reçue peut être effectuée sur commande effectuée par un opérateur à l'aide d'une interface homme-machine ou automatiquement dès que l'aéronef s'est élevé d'une hauteur courante supérieure ou égale à une hauteur prédéterminée. La hauteur courante peut être déterminée à l'aide d'un altimètre de l'aéronef.

Selon une quatrième variante de l'invention, suite à la connexion initiale, une première détermination d'une première valeur de la hauteur-sol *Hs* avant décollage de l'aéronef est effectuée. Cette première détermination d'une première valeur de la hauteur-sol *Hs* est effectuée de façon usuelle en calculant, à l'aide du calculateur, la hauteur-sol *Hs* en fonction d'un temps écoulé minimal entre l'émission du signal électromagnétique primaire et la réception du signal électromagnétique réfléchi. Le signal électromagnétique réfléchi peut être issu d'une réflexion du signal électromagnétique primaire sur la surface survolée par l'aéronef ou sur un équipement installé sur ou porté par l'aéronef, selon l'angle d'ouverture.

Ensuite, au moins une itération de réglage est réalisée et peut comporter les étapes suivantes :
- deuxième détermination d'une deuxième valeur de la hauteur-sol après décollage de l'aéronef,
- comparaison de la première valeur et de la deuxième valeur de la hauteur-sol,
- si une différence entre la deuxième valeur et de la première valeur est inférieure ou égale à un écart prédéterminé, nouvelle connexion à l'organe de traitement d'un élément rayonnant additionnel parmi les éléments rayonnants.

Suite à cette nouvelle connexion, une nouvelle itération de réglage est réalisée et répétée jusqu'à ce que la différence entre la deuxième valeur et de la première valeur soit supérieure à l'écart prédéterminé.

Ainsi, cette quatrième variante est réalisée en partie au sol et en partie en vol, ladite au moins une itération de réglage étant réalisée après le décollage de l'aéronef.

Après décollage, la hauteur-sol *Hs* augmente progressivement lorsque l'aéronef s'élève. La deuxième valeur de la hauteur-sol après décollage de l'aéronef obtenue lors de la deuxième détermination le confirme lorsque le signal électromagnétique réfléchi est issu d'une réflexion uniquement sur la surface survolée par l'aéronef.

Toutefois, si le signal électromagnétique réfléchi est issu d'une réflexion sur un équipement installé sur ou porté par l'aéronef, la deuxième valeur de la hauteur-sol *Hs* de l'aéronef est sensiblement identique ou proche de la première valeur de la hauteur-sol *Hs.* Une faible différence peut notamment être due notamment aux précisions de mesure.

En conséquence, si la première valeur et la deuxième valeur de la hauteur-sol *Hs* déterminées à l'aide des signaux électromagnétiques réfléchis réellement captés par l'antenne réceptrice respectivement avant et après décollage de l'aéronef sont sensiblement identiques ou proches, on peut en déduire que le signal électromagnétique primaire a été réfléchi au moins partiellement par un équipement installé sur ou porté par l'aéronef. L'angle d'ouverture de l'antenne réglable est donc incompatible avec le ou les équipements installés sur ou portés par l'aéronef. La détermination de la hauteur-sol *Hs* par le radioaltimètre ne peut donc pas être considérée comme fiable dans ces conditions.

A contrario, si cette première valeur et cette deuxième valeur de la hauteur-sol *Hs* sont significativement différentes, on peut en déduire que le signal électromagnétique primaire a été réfléchi uniquement. par la surface survolée. L'angle d'ouverture est alors compatible avec le ou les équipements installés sur ou portés par l'aéronef. La détermination de la hauteur-sol *Hs* par le radioaltimètre peut alors être considérée comme fiable dans ces conditions. Aucune itération de réglage complémentaire n'est donc nécessaire. Un message de validation de cet angle d'ouverture peut être émis, à l'aide par exemple d'un afficheur de l'aéronef, à l'attention d'un opérateur.

Par suite, afin de prendre en compte une quatrième marge de sécurité dans le cadre de l'invention, on peut considérer que le signal électromagnétique primaire a été réfléchi au moins partiellement par un équipement installé sur ou porté par l'aéronef lorsque la différence entre la première valeur et de la deuxième valeur de la hauteur-sol *Hs* est inférieure ou égale à un écart prédéterminé, l'écart prédéterminé étant par exemple sensiblement égal à la quatrième marge de sécurité. Un tel écart prédéterminé est par exemple égal à un ou deux pieds (1à 2 ft), soit 3,048 à 6,096 mètres.

Une nouvelle connexion à l'organe de traitement d'un élément rayonnant additionnel est alors réalisée, par exemple selon un ordre prédéterminé. L'élément rayonnant additionnel connecté à l'organe de traitement peut être défini comme pour les variantes précédentes.

Ensuite, une nouvelle itération de réglage est réalisée, et ainsi de suite jusqu'à ce que la différence entre la première valeur et la deuxième valeur de la hauteur-sol Hs soit supérieure à l'écart prédéterminé.

La deuxième détermination de la deuxième valeur de la hauteur-sol Hs après décollage de l'aéronef peut être effectuée sur commande d'un opérateur, à l'aide d'une interface homme-machine, ou automatiquement dès que l'aéronef s'est élevé d'une hauteur courante supérieure ou égale à une hauteur prédéterminée. La hauteur courante peut être déterminée à l'aide d'un altimètre de l'aéronef.

Selon un autre aspect et une possibilité compatible avec les précédentes, la longueur de l'interstice séparant deux éléments rayonnants adjacents peut être proportionnelle à une longueur d'onde du signal électromagnétique primaire émis par la source de l'antenne émettrice.

La longueur de l'interstice séparant deux éléments rayonnants adjacents peut être identique pour tous les éléments rayonnants, et dans au moins deux directions distinctes lorsque l'antenne émettrice comporte au moins deux rangées d'éléments rayonnants.

Selon un autre aspect, les éléments rayonnants peuvent être de configuration plane, et/ou sont implantés de préférence au niveau d'une face inférieure de l'aéronef, et par exemple sous une cellule de l'aéronef.

Selon un autre aspect, l'antenne émettrice et l'antenne réceptrice peuvent former une seule et même antenne. Dans ce cas, les éléments rayonnants sont connectés respectivement à la source de l'antenne émettrice et au récepteur de l'antenne réceptrice.

Selon une possibilité compatible avec les précédentes, le procédé peut comporter une détermination d'un angle d'inclinaison maximale de l'aéronef pour lequel la détermination de la hauteur sol Hs est considérée correcte, l'angle d'inclinaison maximale étant fonction d'un nombre d'éléments rayonnants connectés électriquement à l'organe de traitement, et un affichage de l'angle d'inclinaison maximale sur un afficheur de l'aéronef.

En effet, suite au réglage de l'angle d'ouverture de l'antenne réglable, cet angle d'ouverture peut avoir été réduit pour éviter que le signal électromagnétique primaire rencontre un équipement de l'aéronef, et afin de permettre ainsi une détermination d'une hauteur-sol *Hs* correcte. Dès lors, une prise d'angle d'inclinaison importante de l'aéronef, par exemple en roulis, voire en tangage, lors d'un virage peut avoir pour effet que le signal électromagnétique primaire ne se dirige pas vers le sol selon une direction verticale, à savoir parallèle à la direction de la gravité terrestre.

En conséquence, la durée la plus courte entre l'émission du signal électromagnétique primaire et la réception du signal électromagnétique réfléchi utilisée pour déterminer la hauteur-sol *Hs* correspond à un trajet de ce signal électromagnétique qui n'est pas selon une direction verticale. La hauteur-sol *Hs* ainsi déterminée n'est donc pas correcte et est augmentée ou diminuée par rapport à la hauteur-sol *Hs* réelle.

Il est donc important, voire essentiel d'informer l'opérateur de ce risque.

Dans ce but, le procédé selon l'invention peut comporter la détermination d'un angle d'inclinaison maximale de l'aéronef pour lequel la détermination de la hauteur sol *Hs* est considérée correcte. Cet angle d'inclinaison maximale peut être calculé par le calculateur selon une loi mémorisée et en fonction de l'angle d'ouverture de l'antenne réglable, et donc en fonction d'un nombre d'éléments rayonnants connectés électriquement à l'organe de traitement. Cet angle d'inclinaison maximale est, par exemple, égal à la moitié de l'angle d'ouverture de l'antenne réglable ou à la moitié de l'angle d'ouverture de l'antenne réglable à laquelle est retirée une marge angulaire de sécurité. De plus, cette marge angulaire de sécurité peut varier en fonction de la hauteur de vol de l'aéronef. Cette marge angulaire de sécurité peut par exemple être égale à 30% de l'angle d'ouverture de l'antenne réglable pour des hauteurs de vol inférieures ou égales à 100 pieds (100 ft), soit 30,48 mètres, et 20% pour des hauteurs de vol supérieures.

L'angle d'ouverture de l'antenne réglable est uniquement fonction des éléments rayonnants connectés électriquement à l'organe de traitement. Dès lors, une mémoire du calculateur ou une mémoire reliée au calculateur peut comporter un tableau de correspondance ou une base de données par exemple, permettant d'associer différents angles d'inclinaison maximale aux différentes configurations d'éléments rayonnants connectés électriquement à l'organe de traitement. Le calculateur peut ainsi déterminer l'angle d'inclinaison maximale associé à la configuration courante d'éléments rayonnants connectés électriquement à l'organe de traitement.

Ensuite, un affichage de cet angle d'inclinaison maximale est effectué sur un afficheur de l'aéronef pour informer l'opérateur de cet angle d'inclinaison maximale. Cet angle d'inclinaison maximale peut également être une limite prise en compte par certains modes d'un pilote automatique de l'aéronef.

Alternativement ou de façon complémentaire, un alerteur relié au calculateur peut émettre une alerte, visuelle, sonore ou haptique, lorsque l'aéronef se rapproche, atteint, voire dépasse cet angle d'inclinaison maximale. Cette alerte peut également être une donnée d'entrée pour certains modes d'un pilote automatique de l'aéronef. Dans ce but, un angle d'inclinaison courant de l'aéronef, déterminé par exemple par un dispositif de mesure usuel d'une inclinaison de l'aéronef, est comparé à cet angle d'inclinaison maximale.

La présente invention a aussi pour objet un radioaltimètre pour aéronef, le radioaltimètre comportant une antenne émettrice munie d'une source générant un signal électromagnétique primaire, une antenne réceptrice munie d'un récepteur apte à recevoir un signal électromagnétique réfléchi résultant d'une réflexion dudit signal électromagnétique primaire, et un calculateur, le calculateur déterminant la hauteur-sol Hs de l'aéronef à partir de données fournies par l'antenne émettrice et l'antenne réceptrice. De plus, le radioaltimètre comporte une antenne réglable parmi l'antenne émettrice et l'antenne réceptrice, l'antenne réglable étant munie d'un organe de traitement, d'au moins deux éléments rayonnants et d'une pluralité de connecteurs permettant de relier respectivement les éléments rayonnants électriquement à l'organe de traitement, deux éléments rayonnants adjacents étant séparés par un interstice non nul. Enfin, le radioaltimètre est configuré pour la mise en oeuvre du procédé précédemment décrit.

La présente invention a encore pour objet un aéronef équipé d'un radioaltimètre précité.

L'invention et ses avantages apparaîtront avec plus de détails dans le cadre de la description qui suit avec des exemples donnés à titre illustratif en référence aux figures annexées qui représentent :
- la figure 1, une vue d'un radioaltimètre selon l'invention,
- la figure 2, une vue d'un radioaltimètre selon l'invention,
- la figure 3, un graphique relatif au signal électromagnétique primaire émis par une antenne émettrice,
- la figure 4, une vue d'un aéronef muni d'un radioaltimètre selon l'invention,
- la figure 5, une vue synoptique d'un procédé selon l'invention,
- la figure 6, une représentation de la réalisation d'une variante de l'étape de réglage de l'angle d'ouverture de l'antenne réglable, et
- les figures 7 et 8, des vues de l'aéronef.

Les éléments présents dans plusieurs figures distinctes sont affectés d'une seule et même référence.

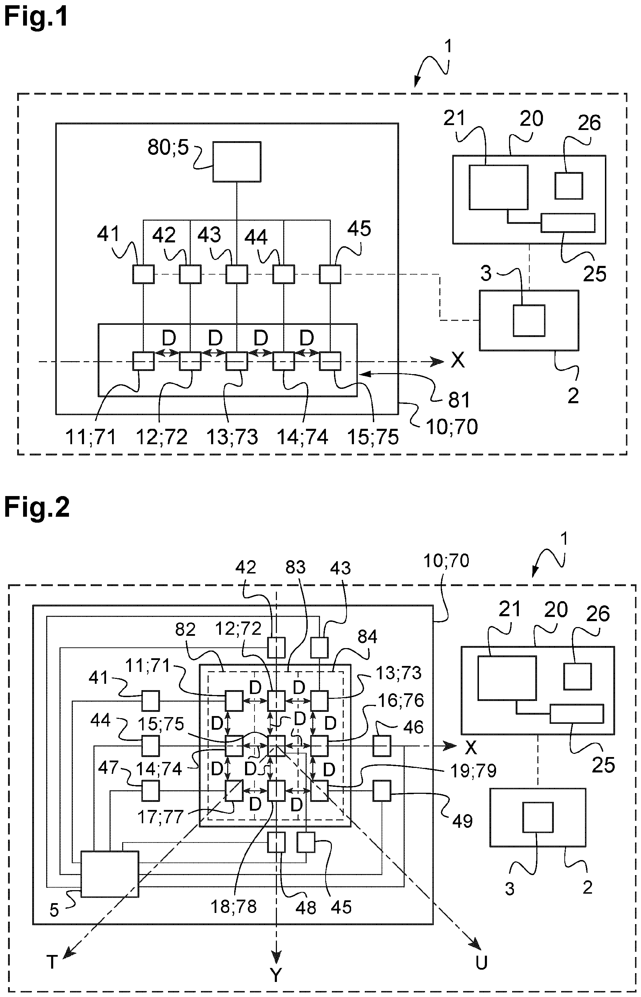

Les figures 1 et 2 représentent des radioaltimètres 1 selon l'invention destinés à équiper un aéronef. Quelle que soient la réalisation, un tel radioaltimètre 1 comporte de façon commune un antenne émettrice 10, une antenne réceptrice 20 et un calculateur 2. Le calculateur 2 est relié à l'antenne émettrice 10 et à l'antenne réceptrice 20, par une liaison filaire ou par une liaison sans fil.

L'antenne émettrice 10 comporte une source 5 générant un signal électromagnétique primaire 51,52 et peut comporter un ou plusieurs éléments rayonnants 11-19 susceptibles d'être reliés électriquement à la source 5. L'antenne réceptrice 20 comporte un récepteur 25 apte à recevoir un signal électromagnétique réfléchi 55,56 résultant par exemple d'une réflexion du signal électromagnétique primaire 51 et peut comporter un ou plusieurs éléments rayonnants 21 susceptibles d'être reliés au récepteur 25.

Les radioaltimètres 1 selon l'invention comportent également une antenne réglable munie d'un organe de traitement 80 et de plusieurs éléments rayonnants susceptibles d'être reliés électriquement à l'organe de traitement 80 respectivement par des liaisons électriques comportant chacune un connecteur 41-49. Chaque connecteur 41-49 peut comporter un relais, un contacteur ou un interrupteur par exemple.

Chaque connecteur 41-49 est également relié par une liaison filaire ou par une liaison sans fil au calculateur 2. Le calculateur 2 pilote ainsi indépendamment la commutation de chaque connecteur 41-49 d'une position ouverte à une position fermée, et inversement, afin de relier électriquement un élément rayonnant à l'organe de traitement 80 ou de couper la liaison électrique entre un élément rayonnant et l'organe de traitement 80.

L'antenne réglable peut être l'antenne émettrice 10, l'organe de traitement 80 étant alors la source 5 de l'antenne émettrice 10. L'antenne réglable peut être l'antenne réceptrice 20, l'organe de traitement 80 étant alors le récepteur 25 de l'antenne réceptrice 20. Selon les exemples de radioaltimètres 1 représentés sur les figures 1 et 2, l'antenne réglable est l'antenne émettrice 10.

Selon la figure 1, l'antenne réglable, à savoir l'antenne émettrice 10, peut comporter une rangée 31 de plusieurs éléments rayonnants, par exemple cinq éléments rayonnants 11-15 selon l'exemple représenté. Les éléments rayonnants 11-15 peuvent par exemple être de forme carrée et selon un plan.

Selon la figure 2, l'antenne réglable, à savoir l'antenne émettrice 10, peut comporter au moins deux rangées 32-34 de plusieurs éléments rayonnants, par exemple trois rangées 32,33,34 de trois éléments rayonnants 11-19 chacune selon l'exemple représenté.

Quelle que soit la réalisation et indépendamment du nombre de rangées 31-34 d'éléments rayonnants 11-19, deux éléments rayonnants 11-19 adjacents sont séparés par un interstice de longueur D non nulle. De la sorte, deux éléments rayonnants 11-19 adjacents ne sont jamais en contact l'un avec l'autre dans quelque direction que ce soit.

Ces interstices peuvent être identiques entre tous les éléments rayonnants 11-19 d'une rangée 31-34, et peuvent également être identiques avec l'interstice séparant deux rangées 31-34 adjacentes. Alternativement, des interstices peuvent être différents entre certains éléments rayonnants 11-19 de l'antenne réglable.

La longueur D de cet interstice séparant deux éléments rayonnants 11-19 adjacents peut être proportionnelle à une longueur d'onde du signal électromagnétique primaire 51 émis par la source 5 de l'antenne émettrice 10. Par exemple, la longueur *D* de cet interstice entre deux éléments rayonnants 11-19 adjacents peut être égale à un quart ou à la moitié de la longueur d'onde du signal électromagnétique primaire 51. Ainsi, pour un signal électromagnétique primaire 51 émis par le radioaltimètre 1 avec une fréquence comprise entre 4,2 et 4,4 gigahertz, soit de longueur d'onde de l'ordre de 7 centimètres, la longueur *D* de cet interstice peut être égale à 17,5 millimètres. Par ailleurs, les longueur et largeur d'un élément rayonnant 11-19 peuvent être comprises entre 20 et 50 millimètres.

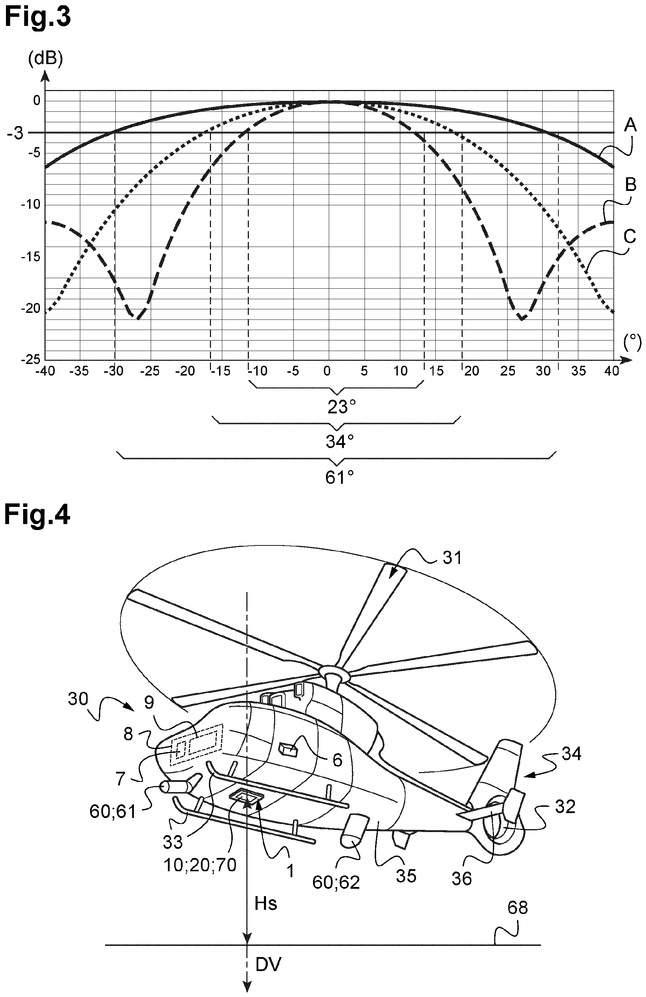

L'antenne réceptrice 20 peut comporter un seul élément récepteur 21, comme représenté sur les figures 1 et 2. Alternativement, l'antenne réceptrice 20 peut comporter plusieurs éléments récepteurs 21. En outre, l'antenne émettrice 10 et l'antenne réceptrice 20 peuvent être distinctes, comme représenté sur les figures 1 et 2. Alternativement, l'antenne émettrice 10 et l'antenne réceptrice 20 peuvent être confondues et former une seule et même antenne, comme représenté sur la figure 3. Dans ce cas, les éléments rayonnants 11-19 de l'antenne émettrice 10 peuvent être utilisés pour les éléments rayonnants 21 de l'antenne réceptrice 20 ou peuvent être distincts.

La source 5 est susceptible de générer un signal électromagnétique primaire 51,52 qui est transmis, via la ou les liaisons électriques dont les connecteurs 41-49 respectifs sont électriquement fermés, à un ou plusieurs éléments rayonnants 11-19. Ce ou ces éléments rayonnants 11-19 peuvent alors émettre conjointement ce signal électromagnétique primaire 51,52 à l'extérieur de l'antenne émettrice 10.

De façon remarquable, lorsque l'antenne réglable est l'antenne émettrice 10, ce signal électromagnétique primaire 51,52 est émis selon un angle d'ouverture variant en fonction du nombre d'éléments rayonnants 11-19 reliés électriquement à la source 5, bien que le signal électromagnétique généré par la source 5 et transmis à ces éléments rayonnants 11-19 soit inchangé.

La figure 3 représente un graphique indiquant l'évolution de la puissance du signal électromagnétique primaire 51,52 émis par l'antenne émettrice 10, utilisée en tant qu'antenne réglable, en fonction de l'angle d'ouverture couvert par un faisceau formé par ce signal électromagnétique primaire 51,52 pour trois nombres différents d'éléments rayonnants 11-19 reliés électriquement à la source 5, qui est l'organe de traitement 80 de l'antenne réglable. La courbe A correspond à quatre éléments rayonnants 11-19 reliés électriquement à la source 5, la courbe B correspond à six éléments rayonnants 11-19 reliés électriquement à la source 5, et la courbe C correspond à huit éléments rayonnants 11-19 reliés électriquement à la source 5.

Il est d'usage de considérer qu'un signal électromagnétique primaire 51,52 émis par l'antenne émettrice 10 est exploitable lorsque sa puissance rayonnée est supérieure ou égale à la moitié (-3 dB) de la puissance rayonnée de ce même signal dans la direction la plus favorable, correspondant généralement à l'axe central de l'antenne émettrice 10.

On constate sur le graphique de la figure 3 que l'angle d'ouverture relatif à l'émission du signal électromagnétique primaire par l'antenne émettrice 10 correspondant à une puissance du signal électromagnétique primaire 51 supérieure ou égale à -3 dB diminue avec l'augmentation du nombre d'éléments rayonnants 11-19 reliés électriquement à la source 5.

En effet, avec quatre éléments rayonnants 11-19 reliés électriquement à la source 5, l'angle d'ouverture à -3 dB est de 61 degrés (61°), avec six éléments rayonnants 11-19 reliés électriquement à la source 5, cet angle d'ouverture est réduit à 34°, et pour huit éléments rayonnants 11-19 reliés électriquement à la source 5, cet angle d'ouverture diminue jusqu'à 23°.

Dans le cas où l'antenne émettrice 10 comporte une unique rangée 31 d'éléments rayonnants 11-15 orientés selon une direction X, comme représenté sur la figure 1, la variation de l'angle d'ouverture en fonction du nombre d'éléments rayonnants 11-15 reliés électriquement à la source 5 se produit uniquement selon cette direction X.

Dans le cas où l'antenne émettrice 10 comporte trois rangées 32-34 d'éléments rayonnants 11-19 orientées selon deux directions orthogonales X,Y, comme représenté sur la figure 2, la variation de l'angle d'ouverture en fonction du nombre d'éléments rayonnants 11 - 19 reliés électriquement à la source 5 peut se produire selon ces deux directions X,Y ainsi que selon des directions intermédiaires U,T, en fonction du nombre d'éléments rayonnants 11-19 reliés électriquement à la source 5 et de leurs positions respectives.

Le radioaltimètre 1 selon l'invention est destiné à équiper un aéronef 30, représenté sur la figure 4, afin de fournir une mesure de la hauteur-sol *Hs* de l'aéronef 30, à savoir la distance entre l'aéronef 30 et la surface survolée 70. Cette hauteur-sol *Hs* est généralement mesurée selon une direction *DV* dite « verticale » dans un repère terrestre, et parallèle à la direction de la gravité terrestre. L'altimètre 1 peut être implanté sur face inférieure de l'aéronef 30, l'antenne émettrice 10 et l'antenne réceptrice 20 étant dirigées vers la surface survolée 70 par l'aéronef 30. L'antenne émettrice 10 et l'antenne réceptrice 20 sont, par exemple, implantées sous une cellule 35 de l'aéronef 30, et orientées vers le sol lorsque l'aéronef 30 est considéré posé au sol.

La cellule 35 illustrée supporte un train d'atterrissage 33 à patins, des rotors 31,32 et des organes de stabilisation 34,36. Des équipements 60 optionnels peuvent être installés sous la cellule 35 en fonction des missions envisagées. Par exemple, un projecteur 61 peut être installé sous le nez de l'aéronef 30, à savoir à l'avant de la cellule 35. Un radar 62 peut aussi être installé sous la cellule 35, en arrière du train d'atterrissage 33 par exemple. D'autres équipements 60, telle une caméra, peuvent aussi être installés sous la cellule 35.

Selon l'exemple de la figure 4, l'antenne émettrice 10 et l'antenne réceptrice 20 sont confondues et installées sous la cellule 35, entre les patins du train d'atterrissage 33.

De plus, des instructions ou un programme d'ordinateur peuvent être stockés dans une mémoire 3 du calculateur 2 ou dans une mémoire reliée à ce calculateur 2. Le calculateur 2 peut alors exécuter ces instructions ou ce programme pour mettre en oeuvre un procédé de mesure de la hauteur-sol *Hs* de l'aéronef 30 au moyen du radioaltimètre 1.

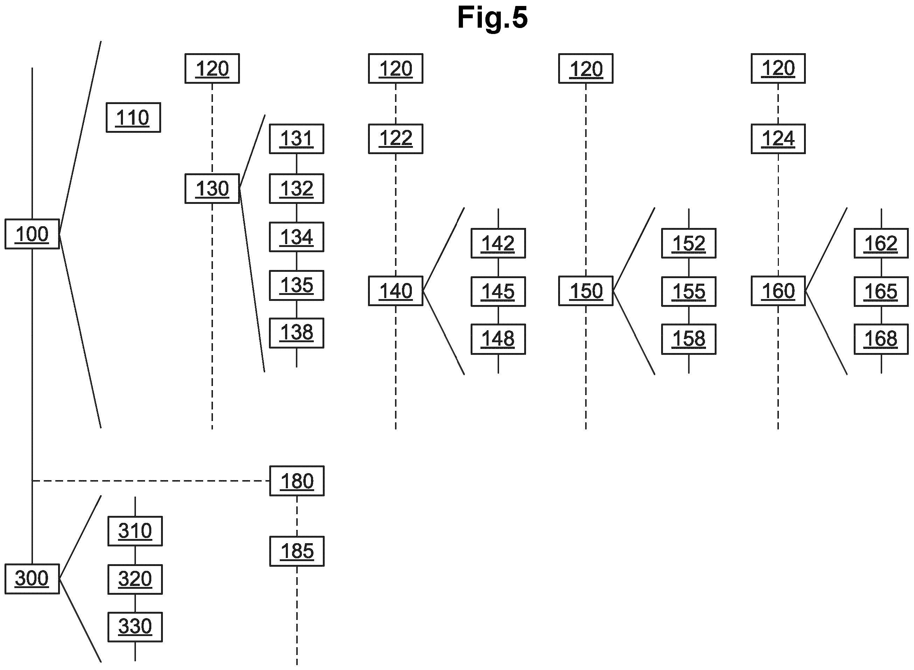

La figure 5 représente un schéma synoptique de ce procédé de mesure de la hauteur-sol *Hs.* Ce procédé peut comporter deux étapes principales, à savoir une étape de réglage 100 d'un angle d'ouverture de l'antenne réglable en connectant électriquement un ou plusieurs des éléments rayonnants 11-19 à l'organe de traitement 80 par l'intermédiaire des connecteurs 41-49, et une étape de détermination 300 d'une hauteur-sol *Hs* de l'aéronef 30.

L'étape de détermination 300 d'une hauteur-sol *Hs* peut comporter de façon usuelle les sous-étapes suivantes :
- émission 310 du signal électromagnétique primaire 51 par l'antenne émettrice 10,
- une réception 320 par l'antenne réceptrice 20 du signal électromagnétique réfléchi 55 résultant d'une réflexion du signal électromagnétique primaire 51, et
- calcul 330 par le calculateur 2 de la hauteur-sol Hs en fonction d'un temps écoulé minimal entre l'émission 310 du signal électromagnétique primaire 51 et la réception 320 du signal électromagnétique réfléchi 55.

Lors du calcul 300, le calculateur 2 mesure le temps écoulé minimal entre l'émission 310 et la réception 320, par exemple à l'aide d'un chronographe que la calculateur 2 comporte. Cette étape de détermination 300 peut de plus comprendre la transmission de la hauteur-sol *Hs* par le calculateur 2 à un système avionique de l'aéronef 30, et par exemple à un afficheur 9 configuré pour afficher la valeur de la hauteur-sol *Hs* calculée. De la sorte, la hauteur-sol *Hs* peut être affichée, par exemple sur un tableau de bord 8 de l'aéronef 30, à l'aide d'un afficheur 9 dédié ou d'un afficheur multifonction.

Cette détermination 300 d'une hauteur-sol Hs est, par exemple, réalisée de façon continue, dès le décollage de l'aéronef 30, voire dès le démarrage du ou des moteurs de l'aéronef 30. Ainsi, le signal électromagnétique primaire 51 peut notamment être émis par l'antenne émettrice 10 dès le décollage de l'aéronef 30.

L'étape de réglage 100 permet quant à elle de définir ou de modifier et d'adapter l'angle d'ouverture de l'antenne de réglage en connectant électriquement un nombre adapté d'éléments rayonnants 11-19 connectés électriquement à l'organe de traitement 80 par l'intermédiaire des connecteurs 41-49.

En effet, un angle d'ouverture trop important de l'antenne émettrice 10peut induire une réflexion du signal électromagnétique primaire 51 sur un équipement 60 de l'aéronef 30, voire son train d'atterrissage 33, faussant alors la mesure de la hauteur-sol *HS.* De façon similaire, un angle d'ouverture trop important de l'antenne réceptrice 20 peut induire de capter un signal électromagnétique réfléchi 55 par un équipement 60 de l'aéronef 30, voire son train d'atterrissage 33, faussant également la mesure de la hauteur-sol *HS.*

Dans les deux cas, la réalisation d'un tel réglage 100 de l'antenne réglable, qui peut être l'antenne émettrice 10 ou l'antenne réceptrice 20, permet de définir le nombre d'éléments rayonnants 11-19 à connecter électriquement à l'organe de traitement 80 et de les connecter afin de définir ou d'adapter l'angle d'ouverture de l'antenne réglable à la présence ou l'absence d'équipements 60.

Par suite, il est considéré que l'antenne réglable est l'antenne émettrice 10, l'organe de traitement 80 étant alors la source 5 de l'antenne émettrice 10. Les éléments rayonnants de l'antenne réglable sont donc les éléments rayonnants 11-19 de l'antenne émettrice 10. Un fonctionnement similaire lorsque l'antenne réglable est l'antenne réceptrice 20 peut être déduit des exemples décrits.

L'étape de réglage 100 peut se décliner selon diverses façons.

Tout d'abord, l'étape de réglage 100 peut comporter une commande 110 d'au moins un des connecteurs 41-49 à l'aide d'une interface homme-machine 7 par un opérateur. L'interface homme-machine 7 peut se trouver par exemple sur le tableau de bord 8 de l'aéronef 30 ou sur un tableau de bord d'un poste de pilotage à distance de l'aéronef 30. En effet, l'opérateur peut être un pilote ou un copilote présent dans l'aéronef 30, ou piloter l'aéronef 30 à distance. L'interface homme-machine 7 peut comprendre par exemple un écran muni d'une dalle tactile, un écran associé à un dispositif de sélection tel qu'une souris ou un équivalent, un ou des boutons, etc.

En effet, en fonction de la configuration des équipements 60 fixés sous l'aéronef 30, des essais ou des simulations peuvent avoir permis de déterminer préalablement le ou les éléments rayonnants 11-19 à connecter électriquement à la source 5 pour avoir un angle d'ouverture relatif à l'émission du signal électromagnétique primaire compatible avec ces équipements 60 et leurs positions sous l'aéronef 30.

Par exemple, l'opérateur peut sélectionner directement le ou les éléments rayonnants 60 à relier électriquement à la source 5 à l'aide de l'interface homme-machine 7, le calculateur 2 pilotant en conséquence la fermeture du ou des connecteurs 41-49 correspondants pour connecter électriquement à la source 5 le ou les éléments rayonnants 11-19 sélectionnés.

Selon un autre exemple, l'opérateur peut sélectionner une configuration d'un ou de plusieurs équipements 60 installés sous l'aéronef 30 à l'aide de l'interface homme-machine 7. Le calculateur 2 pilote en conséquence le ou les connecteurs 41-49 nécessaires pour relier électriquement à la source 5 les éléments rayonnants 11 - 19 correspondants. Le calculateur 2 utilise dans ce but des informations stockées dans la mémoire 3. Ces informations peuvent être sous la forme d'un modèle comportant une loi, un tableau ou une base de données permettant d'associer à chacune des configurations connues le ou les éléments rayonnants 11-19 à connecter électriquement à la source 5.

Dans les deux cas, le calculateur 2 pilote le ou les connecteurs 41-49 en leur transmettant un signal de commande, électrique ou optique, analogique ou numérique.

Alternativement, l'étape de réglage 100 peut être réalisée automatiquement à l'aide du calculateur 2 afin de régler et d'adapter automatiquement l'angle d'ouverture en fonction du ou des équipements 60 installés.

Plusieurs variantes d'une réalisation automatique ce réglage 100 sont envisageables. Un opérateur peut sélectionner, par exemple à l'aide de l'interface homme-machine 7, la variante de ce réglage 100 à réaliser automatiquement, préalablement au décollage de l'aéronef 30. Une variante peut également être présélectionnée automatiquement pour être exécutée au démarrage de l'aéronef 30.

Selon une première variante, le réglage 100 d'un angle d'ouverture relatif à l'émission du signal électromagnétique primaire comporte dans un premier temps une connexion initiale 120 pour connecter électriquement à la source 5 un unique élément rayonnant 11-19 parmi les éléments rayonnants 11-19. Cette connexion initiale 120 permet d'obtenir un angle d'ouverture maximal. Le calculateur 2 pilote dans ce cas la fermeture d'un seul connecteur 41-49, les autres connecteurs 41-49 étant ouverts.

Ensuite, au moins une itération de réglage 130 est réalisée, pour dans un premier temps vérifier si cet angle d'ouverture maximal permet une mesure fiable et correcte de la hauteur-sol *Hs,* puis, si ce n'est pas le cas, pour dans un second temps le modifier et l'adapter jusqu'à obtenir une mesure fiable et correcte de la hauteur-sol *Hs.*

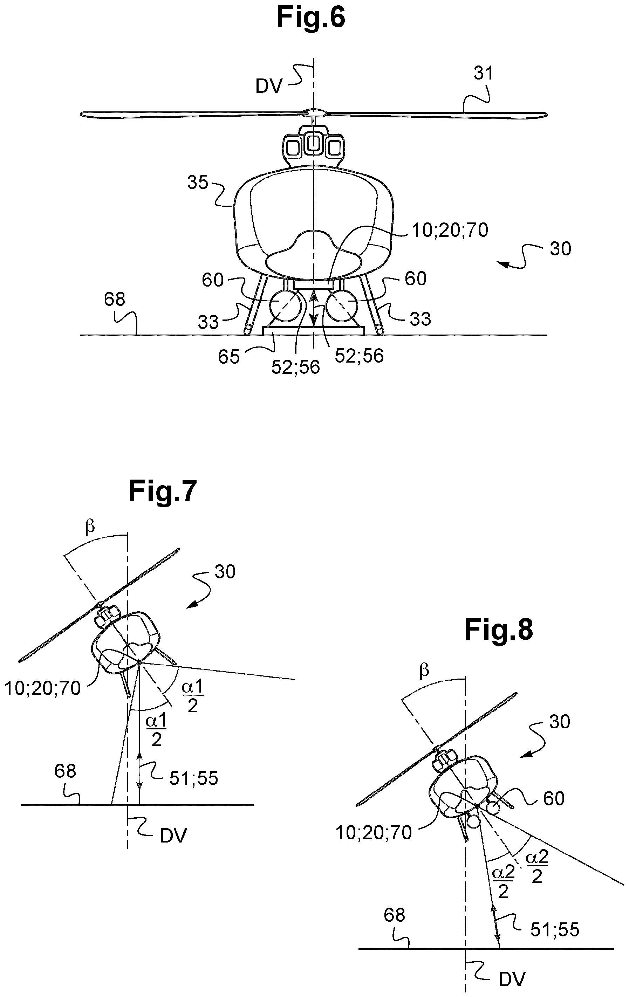

Chaque itération de réglage 130 comporte plusieurs sous-étapes réalisées avant le décollage de l'aéronef 30, et avant la réalisation de l'étape de détermination 300 d'une hauteur-sol *Hs.* Tout d'abord, le procédé comporte une émission initiale 131, par l'antenne émettrice 10, d'un signal électromagnétique primaire calibré 52 vers au moins un panneau 65 en matériau absorbant les ondes électromagnétiques situé au sol 68 comme représenté sur la figure 6. Lors de cette émission initiale 131, la source 5 génère le signal électromagnétique primaire calibré 52 qui est transmis à un ou à plusieurs éléments rayonnants 11-19 via la ou les liaisons électriques dont les connecteurs 41-49 respectifs sont électriquement fermés, à un ou plusieurs éléments rayonnants 11-19, ce ou ces éléments rayonnants 11-19 émettant alors le signal électromagnétique primaire calibré 52 vers l'environnement extérieur à l'antenne émettrice 10. Le ou les panneaux 65 ont été préalablement disposés au sol 68 à la verticale des antennes émettrice 10 et réceptrice 20 et à une distance connue de ces antennes 10,20. Un tel panneau 65 dispose de caractéristiques connues et significatives d'absorption d'ondes électromagnétiques pour permettre d'identifier les ondes réfléchies par un tel panneau 65. Le signal électromagnétique primaire calibré 52 est de puissance connue.

Ensuite et en référence à nouveau à la figure 5, le procédé comporte une réception initiale 132 d'un signal électromagnétique calibré réfléchi 56 par l'antenne réceptrice 20, ce signal électromagnétique calibré réfléchi 56 pouvant résulter d'une réflexion du signal électromagnétique primaire calibré 52 sur le panneau 65 ou sur un équipement 60 par exemple. Une mesure initiale 134 d'une puissance dite « puissance reçue » du signal électromagnétique calibré réfléchi 56 est alors réalisée à l'aide d'un capteur 26 dédié de l'antenne réceptrice 20. Cette mesure initiale 134 de la puissance reçue peut se faire au travers d'une mesure d'une tension électrique aux bornes d'une charge prédéterminée que comporte ce capteur 26.

Lorsque le signal électromagnétique calibré réfléchi 56 résulte uniquement d'une réflexion du signal électromagnétique primaire calibré 52 sur le panneau 65, la puissance reçue est fonction de la puissance du signal électromagnétique primaire calibré 52, qui est connue, de la distance entre le panneau 65 et les antennes émettrice 10 et réceptrice 20 ainsi que des caractéristiques d'absorption connues des ondes électromagnétiques de ce panneau 65. Une telle puissance reçue théorique est donc connue et peut être estimée.

Lorsque le signal électromagnétique calibré réfléchi 56 résulte d'une réflexion du signal électromagnétique primaire calibré 52 sur le panneau 65 et sur au moins un équipement 60, la puissance reçue est différente et supérieure à la puissance reçue estimée. En effet, l'équipement 60 est d'une part situé plus proche des antennes 10,20 que le panneau 65, et d'autre part constitué d'un matériau absorbant moins les ondes électromagnétiques que le panneau 65, voire les réfléchissant entièrement.

Dès lors, une comparaison initiale 138 de cette puissance reçue avec un seuil initial est alors effectuée par le calculateur 2, le seuil initial étant par exemple fonction de cette puissance reçue estimée, éventuellement en prenant en compte une première marge de sécurité. Le seuil initial peut également être égal à un pourcentage de la puissance connue du signal électromagnétique 52 émis par l'antenne émettrice 10. Le seuil initial a été déterminé préalablement et est stocké par exemple dans la mémoire 3.

Suite à cette comparaison initiale 138, si la puissance reçue est supérieure ou égale au seuil initial, le signal électromagnétique primaire calibré 52 a été réfléchi au moins partiellement par un équipement 60. Le radioaltimètre 1 ne peut donc pas être considérée comme fiable.

Une nouvelle connexion 138 à la source 5 d'un élément rayonnant 11-19 supplémentaire parmi les éléments rayonnants 11-19 est donc nécessaire et réalisée par le calculateur 2, par l'intermédiaire d'un des connecteurs 41-49. L'élément rayonnant 11-19 supplémentaire connecté électriquement à la source 5 est un élément rayonnant 11-19 adjacent à un élément rayonnant 11-19 déjà connecté à la source 5.

Une nouvelle itération de réglage 130 est alors réalisée et répétée si besoin jusqu'à ce que la puissance reçue du signal électromagnétique calibré réfléchi 56 réellement capté par l'antenne réceptrice 20 soit inférieure à ce seuil initial.

En effet, dès que la puissance reçue du signal électromagnétique calibré réfléchi 56 est inférieure au seuil initial, on peut en déduire que le signal électromagnétique primaire calibré 52 a été réfléchi uniquement par le panneau 65. L'angle d'ouverture est alors compatible avec le ou les équipements 60 de l'aéronef 30. La détermination de la hauteur-sol *Hs* par le radioaltimètre 1 peut alors être considérée comme fiable et correcte. Aucune itération de réglage 130 supplémentaire n'est nécessaire. Un message de validation de cet angle d'ouverture peut être émis, à l'aide par exemple d'un afficheur 9 de l'aéronef 30 piloté par le calculateur 2, à l'attention de l'opérateur.

Selon une deuxième variante de l'invention, le réglage 100 d'un angle d'ouverture relatif à l'émission du signal électromagnétique primaire comporte dans un premier temps la connexion initiale 120 électriquement à la source 5 d'un unique élément rayonnant 11-19 de façon identique à la première variante.

Ensuite, une première mesure 122 d'une première puissance reçue du signal électromagnétique réfléchi 55 capté par l'antenne réceptrice 20 est réalisée avant décollage de l'aéronef 30. Ce signal électromagnétique réfléchi 55 peut résulter d'une réflexion sur le sol ou sur un équipement 60 du signal électromagnétique primaire 51 émis par l'antenne émettrice 10. Cette première mesure 122 est réalisée à l'aide du capteur 26.

Ensuite, au moins une itération de réglage 140 est réalisée après décollage de l'aéronef 30 et comporte plusieurs sous-étapes. Comme pour la première variante, cette itération de réglage 140 permet de vérifier si l'angle d'ouverture maximal permet une mesure fiable et correcte de la hauteur-sol *Hs,* puis, si ce n'est pas le cas, de le modifier et de l'adapter jusqu'à obtenir une mesure fiable et correcte de la hauteur-sol *Hs.*

AU cours de chaque itération 140, une deuxième mesure 142 d'une deuxième puissance reçue du signal électromagnétique réfléchi 55 capté par l'antenne réceptrice 20 est réalisée à l'aide du capteur 26. Ce signal électromagnétique réfléchi 55 peut résulter d'une réflexion du signal électromagnétique primaire 51 émis par l'antenne émettrice 10 sur la surface survolée 70 ou sur un équipement 60 par exemple. La deuxième mesure 142 peut être effectuée sur commande de l'opérateur à l'aide de l'interface homme-machine 7 ou automatiquement dès que l'aéronef 30 s'est élevé d'une hauteur courante supérieure ou égale à une hauteur prédéterminée, par exemple 100 ft. La hauteur courante est par exemple déterminée à l'aide d'un altimètre 6 de l'aéronef 30.

Une comparaison 145 de la première puissance reçue et de la deuxième puissance reçue est alors effectuée par le calculateur 2. Suite au décollage de l'aéronef 30, si le signal électromagnétique réfléchi 55 capté par l'antenne réceptrice 20 résulte effectivement uniquement d'une réflexion du signal électromagnétique primaire 51 sur la surface survolée 70, la deuxième puissance reçue diminue avec la prise d'altitude de l'aéronef 30 et est donc différente de la première puissance reçue. Au contraire, si le signal électromagnétique réfléchi 55 capté par l'antenne réceptrice 20 après le décollage résulte au moins partiellement d'une réflexion du signal électromagnétique primaire 51 sur un équipement 60, la deuxième puissance reçue ne varie pas ou peu et est sensiblement constante avec la prise d'altitude de l'aéronef 30. Cette deuxième puissance reçue est donc sensiblement égale à la première puissance reçue.

En conséquence, si une différence déterminée par le calculateur 2 entre la première puissance reçue et de la deuxième puissance reçue est inférieure ou égale à une valeur prédéterminée, une nouvelle connexion 148 à la source 5 d'un élément rayonnant 11-19 supplémentaire est nécessaire et réalisée, de façon similaire à la nouvelle connexion 138 de la première variante, par le calculateur 2, par l'intermédiaire d'un des connecteurs 41-49. La valeur prédéterminée est par exemple non nulle et permet de prendre en compte des variations dans les mesures de la première et la deuxième puissances reçues, dues par exemple à des vibrations de l'aéronef 30 ou la variabilité de ces mesures. La valeur prédéterminée est par exemple égale à une deuxième marge de sécurité.

Une nouvelle itération de réglage 140 est alors réalisée et répétée si besoin jusqu'à ce que la différence entre la première puissance reçue et de la deuxième puissance reçue soit supérieure à la valeur prédéterminée.

Selon une troisième variante de l'invention, le réglage 100 d'un angle d'ouverture relatif à l'émission du signal électromagnétique primaire comporte dans un premier temps la connexion initiale 120 électriquement à la source 5 d'un unique élément rayonnant 11-19 de façon identique aux précédentes variantes.

Ensuite, au moins une itération de réglage 150 est réalisée après décollage de l'aéronef 30 et comporte plusieurs sous-étapes. Comme pour les précédentes variantes, cette itération de réglage 150 permet de vérifier si l'angle d'ouverture maximal permet une mesure fiable et correcte de la hauteur-sol *Hs,* puis, si ce n'est pas le cas, de le modifier et de l'adapter jusqu'à obtenir une mesure fiable et correcte de la hauteur-sol *Hs.*

Ainsi, au cours de chaque itération 150, une mesure de réglage 152 d'une puissance reçue du signal électromagnétique réfléchi 55 capté par l'antenne réceptrice 20 est réalisée par l'intermédiaire du capteur 26. Ce signal électromagnétique réfléchi 55 peut être résultant d'une réflexion par exemple sur la surface survolé 70 ou sur un équipement 60 du signal électromagnétique primaire 51 émis par l'antenne émettrice 10.

Cette mesure de réglage 152 peut être effectuée sur commande de l'opérateur à l'aide de l'interface homme-machine 7 ou automatiquement dès que l'aéronef 30 s'est élevé d'une hauteur courante supérieure ou égale à une hauteur prédéterminée. La hauteur courante est par exemple déterminée à l'aide d'un altimètre 6 de l'aéronef 30.

Une comparaison 155 de cette puissance reçue avec un seuil de puissance est alors effectuée par le calculateur 2. Suite au décollage de l'aéronef 30, si le signal électromagnétique réfléchi 55 capté par l'antenne réceptrice 20 résulte effectivement uniquement d'une réflexion du signal électromagnétique primaire 51 sur la surface survolée 70, cette puissance reçue diminue avec la prise d'altitude de l'aéronef 30 et est, ou devient, inférieure au seuil de puissance prédéterminé, au moins à partir de la hauteur prédéterminée.

Le seuil de puissance peut avoir été préalablement déterminé par calculs, essais ou simulations et stocké par exemple dans la mémoire 3. Le seuil de puissance est, par exemple, égal à une puissance du signal électromagnétique réfléchi 55 capté par l'antenne réceptrice 20 et issu d'une réflexion du signal électromagnétique primaire 51 sur le sol lorsque l'aéronef 30 est au sol, en prenant de préférence en compte une troisième marge de sécurité non nulle.

Au contraire, si le signal électromagnétique réfléchi 55 capté par l'antenne réceptrice 20 après le décollage résulte au moins partiellement d'une réflexion du signal électromagnétique primaire 51 sur un équipement 60, cette puissance reçue ne varie pas ou peu après le décollage, et est sensiblement constante avec la prise d'altitude de l'aéronef 30. La puissance reçue est donc sensiblement égale à une puissance reçue mesurée avant le décollage.

En conséquence, si la puissance reçue est supérieure ou égale au seuil de puissance, une nouvelle connexion 158 à la source 5 d'un élément rayonnant 11-19 supplémentaire est nécessaire et réalisée, de façon similaire aux nouvelles connexions 138, 148 des variantes précédentes.

Une nouvelle itération de réglage 150 est alors réalisée et répétée si besoin jusqu'à ce que la puissance reçue soit inférieure au seuil de puissance.

Selon une quatrième variante de l'invention, le réglage 100 d'un angle d'ouverture relatif à l'émission du signal électromagnétique primaire comporte dans un premier temps la connexion initiale 120 électriquement à la source 5 d'un unique élément rayonnant 11-19 de façon identique aux variantes précédentes.

Puis, le réglage 100 comporte une première détermination 124 d'une première valeur de la hauteur-sol *Hs* réalisée avant décollage de l'aéronef 30, à l'aide du signal électromagnétique réfléchi 55 reçu sur l'antenne réceptrice 20. Cette première détermination 124 de la première valeur de la hauteur-sol *Hs* est réalisée en appliquant l'étape de détermination 300 d'une hauteur-sol *Hs.* Ce signal électromagnétique réfléchi 55 peut résulter d'une réflexion sur le sol ou sur un équipement 60 du signal électromagnétique primaire 51 émis par l'antenne émettrice 10.

Ensuite, le réglage 100 comporte au moins une itération de réglage 160 réalisée après décollage de l'aéronef 30 et comprenant plusieurs sous-étapes. Comme pour les variantes précédentes, cette itération de réglage 160 permet de vérifier si l'angle d'ouverture maximal permet une mesure fiable et correcte de la hauteur-sol *Hs,* puis, si ce n'est pas le cas, de le modifier et de l'adapter jusqu'à obtenir une mesure fiable et correcte de la hauteur-sol *Hs.*

Au cours de chaque itération 160, une deuxième détermination 162 d'une deuxième valeur de la hauteur-sol *Hs* est effectuée, à l'aide du signal électromagnétique réfléchi 55 capté par l'antenne réceptrice 20 en appliquant de nouveau l'étape de détermination 300 d'une hauteur-sol *Hs.* Ce signal électromagnétique réfléchi 55 peut là encore résulter d'une réflexion du signal électromagnétique primaire 51 sur la surface survolée 70 ou sur un équipement 60.

La deuxième détermination 162 peut être effectuée sur commande de l'opérateur à l'aide de l'interface homme-machine 7 ou automatiquement dès que l'aéronef 30 s'est élevé d'une hauteur courante supérieure ou égale à une hauteur prédéterminée. La hauteur courante est par exemple déterminée à l'aide d'un altimètre 6 de l'aéronef 30.

Une comparaison 165 entre la première valeur et la deuxième valeur de la hauteur-sol *Hs* est alors effectuée par le calculateur 2. Suite au décollage de l'aéronef 30, si le signal électromagnétique réfléchi 55 capté par l'antenne réceptrice 20 résulte effectivement uniquement d'une réflexion du signal électromagnétique primaire 51 sur la surface survolée 70, la deuxième valeur de la hauteur-sol *Hs* augmente avec la prise d'altitude de l'aéronef 30 et est donc différente de la première valeur de la hauteur-sol *Hs.* Au contraire, si le signal électromagnétique réfléchi 55 capté par l'antenne réceptrice 20 après le décollage résulte au moins partiellement d'une réflexion du signal électromagnétique primaire 51 sur un équipement 60, la deuxième valeur de la hauteur-sol *Hs* ne varie pas ou peu et est sensiblement constante avec la prise d'altitude de l'aéronef 30. Cette deuxième valeur de la hauteur-sol Hs est donc sensiblement égale à la première valeur de la hauteur-sol *Hs.*

En conséquence, si une différence entre la deuxième valeur et la première valeur est inférieure ou égale à un écart prédéterminé, une nouvelle connexion 168 à la source 5 d'un élément rayonnant 11-19 supplémentaire est nécessaire et réalisée, de façon similaire aux nouvelles connexions 138,148,158 des variantes précédentes. L'écart prédéterminé est, par exemple, non nul et permet de prendre en compte des variations dans les déterminations de la première et la deuxième valeur, dues par exemple à des vibrations de l'aéronef 30. L'écart prédéterminé est par exemple égal à une quatrième marge de sécurité.

Une nouvelle itération de réglage 160 est alors réalisée et répétée si besoin jusqu'à ce que la différence entre la première et la deuxième valeur soit supérieure à l'écart prédéterminé.

Par ailleurs, le procédé peut comporter une détermination 180 d'un angle d'inclinaison maximale de l'aéronef 30 pour lequel la détermination 300 de la hauteur sol *Hs* est considérée correcte et un affichage 185 de cet angle d'inclinaison maximale sur un afficheur 9 de l'aéronef 30. Cet angle d'inclinaison maximale est par exemple fonction d'un nombre des éléments rayonnants 11-19 connectés électriquement à la source 5.

En effet, en fonction du nombre d'éléments rayonnants 11-19 reliés à la source 5, l'angle d'ouverture relatif à l'émission du signal électromagnétique primaire par l'antenne émettrice 10 peut être plus ou moins réduit. Ainsi, pour un premier angle d'ouverture α₁ et lorsque l'aéronef 30 a un angle d'inclinaison β par rapport à la direction verticale *DV* inférieur à la moitié de ce premier angle d'ouverture α₁ comme représenté sur la figure 7, le signal électromagnétique primaire 51 peut être émis depuis l'antenne émettrice 10 selon la direction verticale *DV* jusqu'à la surface survolée 70 par l'aéronef 30, puis le signal électromagnétique réfléchi 55 peut se diriger également selon la direction verticale *DV* vers l'antenne réceptrice 20. Dans ce cas, la détermination 300 de la hauteur-sol *Hs* peut être effectuée de façon fiable et correcte.

A contrario, pour un deuxième angle d'ouverture α₂ et avec le même angle d'inclinaison β de l'aéronef 30 qui est alors supérieur à la moitié de ce deuxième angle d'ouverture α₂ comme représenté sur la figure 8, ni le signal électromagnétique primaire 51 émis depuis l'antenne émettrice 10 vers la surface survolée 70 par l'aéronef 30, ni le signal électromagnétique réfléchi 55 ne peuvent suivre la direction verticale *DV* jusqu'à l'antenne réceptrice 20. Dans ce cas, la détermination 300 de la hauteur-sol *Hs* ne peut pas être effectuée de façon fiable et correcte. La détermination 300 de la hauteur-sol *Hs* fournit selon l'exemple représenté une valeur majorée de la hauteur sol *Hs.* Dans un environnement montagneux, la détermination 300 de la hauteur-sol *Hs* peut fournir une valeur minorée de la hauteur sol *Hs.*

L'angle d'inclinaison maximale est, par exemple, égal à la moitié de l'angle d'ouverture relatif à l'émission du signal électromagnétique primaire, éventuellement soustrait d'une marge de sécurité d'inclinaison. L'affichage de cet angle d'inclinaison maximale sur l'afficheur 9 permet d'indiquer à l'opérateur l'angle d'inclinaison maximale jusqu'auquel la hauteur-sol *Hs* est déterminée de façon fiable et correcte. L'angle d'inclinaison maximale peut être affiché numériquement sur un écran dédié ou être indiqué sur un instrument de type horizon artificiel.

Cet angle d'inclinaison maximale est déterminé en fonction du nombre des éléments rayonnants 11-19 connectés électriquement à la source 5 par le calculateur 2. Une mémoire 3 du calculateur 2 peut comporter un tableau de correspondance, une loi ou une base de données par exemple permettant au calculateur 2 d'associer différents angles d'inclinaison maximale de l'aéronef 30 aux différentes configurations d'éléments rayonnants 11-19 connectés électriquement à la source 5. Le calculateur 2 peut ainsi déterminer l'angle d'inclinaison maximale associé à la configuration courante d'éléments rayonnants connectés électriquement à la source 5 et transmettre un signal porteur d'une information relative à cet angle d'inclinaison maximal à cet écran dédié ou à l'instrument de type horizon artificiel.

Alternativement ou de façon complémentaire, un alerteur relié au calculateur 2 peut émettre une alerte, visuelle, sonore ou haptique, lorsqu'un angle d'inclinaison courant de l'aéronef 30 se rapproche, atteint, voire dépasse cet angle d'inclinaison maximale. Dans ce but, l'aéronef 30 peut comporter un dispositif de mesure usuel pour mesurer cet angle d'inclinaison courante de l'aéronef 30.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et des revendications.

## Revendications

1. Procédé de mesure de la hauteur-sol *(Hs)* d'un aéronef (30) au moyen d'un radioaltimètre (1) comportant une antenne émettrice (10) émettant munie d'une source (5) générant un signal électromagnétique primaire (51,52), une antenne réceptrice (20) munie d'un récepteur (25) apte à recevoir un signal électromagnétique réfléchi (55,56) résultant d'une réflexion dudit signal électromagnétique primaire (51), et un calculateur (2),
**caractérisé en ce que** ledit radioaltimètre (1) comporte une antenne réglable parmi ladite antenne émettrice (10) et ladite antenne réceptrice (20), ladite antenne réglable étant munie d'au moins deux éléments rayonnants (11-19) et d'un organe de traitement (80), deux éléments rayonnants (11-19) adjacents étant séparés par un interstice (L) non nul, ledit organe de traitement (80) comportant ladite source (5) lorsque ladite antenne réglable est ladite antenne émettrice (10) ou ledit récepteur (25) lorsque ladite antenne réglable est ladite antenne réceptrice (20),
ledit procédé comportant :
- un réglage (100) d'un angle d'ouverture de ladite antenne réglable en connectant électriquement audit organe de traitement (80) un ou des éléments rayonnants (11-19) parmi lesdits éléments rayonnants (11-19), et
- après ledit réglage (100), une détermination (300) d'une hauteur-sol (Hs) en fonction d'un temps écoulé minimal entre une émission (310) dudit signal électromagnétique primaire (51) et une réception (320) dudit signal électromagnétique réfléchi (55).

2. Procédé selon la revendication 1,
dans lequel ledit réglage (100) dudit angle d'ouverture comporte :
- une connexion initiale (120) électriquement audit organe de traitement (80) d'un unique élément rayonnant (71-79) parmi lesdits éléments rayonnants (71-79), puis
- au moins une itération de réglage (130) comprenant les étapes suivantes :
• émission initiale (131) par ladite antenne émettrice (10) d'un signal électromagnétique primaire calibré (52) de puissance connue vers au moins un panneau (65) en matériau absorbant les ondes électromagnétiques situé au sol à une distance prédéterminée de ladite antenne émettrice (10),
• réception initiale (132) d'un signal électromagnétique calibré réfléchi (56) par ladite antenne réceptrice (20),
• mesure initiale (134) d'une puissance reçue dudit signal électromagnétique calibré réfléchi (56),
• comparaison initiale (138) de ladite puissance reçue avec un seuil initial, et
• si ladite puissance reçue est supérieure ou égale audit seuil initial, nouvelle connexion (138) audit organe de traitement (80) d'un élément rayonnant (71-79) supplémentaire parmi lesdits éléments rayonnants (71-79), puis
- réalisation d'une nouvelle itération de réglage (130).

3. Procédé selon la revendication 2,
dans lequel ledit seuil initial est égal à un pourcentage de ladite puissance connue dudit signal électromagnétique (52) émis par ladite antenne émettrice (10).

4. Procédé selon la revendication 1,
dans lequel ledit réglage (100) dudit angle d'ouverture comporte :
- une connexion initiale (120) électriquement audit organe de traitement (80) d'un unique élément rayonnant (11-19) parmi lesdits éléments rayonnants (11-19), puis
- une première mesure (122) d'une première puissance reçue dudit signal électromagnétique réfléchi (55) sur ladite antenne réceptrice (20) avant décollage dudit aéronef (30), et
- au moins une itération de réglage (140) comprenant les étapes suivantes :
• deuxième mesure (142) d'une deuxième puissance reçue dudit signal électromagnétique réfléchi (55) sur ladite antenne réceptrice (20) après décollage dudit aéronef (30),
• comparaison (145) de ladite première puissance reçue et de ladite deuxième puissance reçue,
• si une différence entre ladite première puissance reçue et de ladite deuxième puissance reçue est inférieure ou égale à une valeur prédéterminée, nouvelle connexion (148) audit organe de traitement (80) d'un élément rayonnant (11-19) supplémentaire parmi lesdits éléments rayonnants (11-19), puis
- réalisation d'une nouvelle itération de réglage (140).

5. Procédé selon la revendication 4,
dans lequel ladite deuxième mesure (142) est effectuée sur commande à l'aide d'une interface homme-machine (7) ou automatiquement dès que ledit aéronef (30) s'est élevé d'une hauteur courante supérieure ou égale à une hauteur prédéterminée, ladite hauteur courante étant déterminée à l'aide d'un altimètre (6) dudit aéronef (30).

6. Procédé selon la revendication 1,
dans lequel ledit réglage (100) dudit angle d'ouverture comporte :
- une connexion initiale (120) électriquement audit organe de traitement (80) d'un unique élément rayonnant (11-19) parmi lesdits éléments rayonnants (11-19), et
- au moins une itération de réglage (150) comprenant les étapes suivantes :
• mesure de réglage (152) d'une puissance reçue dudit signal électromagnétique réfléchi (55) sur ladite antenne réceptrice (20) après décollage dudit aéronef (30),
• comparaison (155) de ladite puissance reçue avec un seuil de puissance,
• si ladite puissance reçue est supérieure ou égale audit seuil de puissance, nouvelle connexion (158) audit organe de traitement (80) d'un élément rayonnant (11-19) supplémentaire parmi lesdits éléments rayonnants (11-19), puis
- réalisation d'une nouvelle itération de réglage (150).

7. Procédé selon la revendication 6,
dans lequel ladite mesure de réglage (151) de ladite puissance reçue dudit signal électromagnétique réfléchi (55) sur ladite antenne réceptrice (20) après décollage dudit aéronef (30) est effectuée sur commande à l'aide d'une interface homme-machine (7) ou automatiquement dès que ledit aéronef (30) s'est élevé d'une hauteur courante supérieure ou égale à une hauteur prédéterminée, ladite hauteur courante étant déterminée à l'aide d'un altimètre (6) dudit aéronef (30).

8. Procédé selon la revendication 1,
dans lequel ledit réglage (100) dudit angle d'ouverture comporte :
- une connexion initiale (120) électriquement audit organe de traitement (80) d'un unique élément rayonnant (11-19) parmi lesdits éléments rayonnants (11-19), puis
- une première détermination (124) d'une première valeur de ladite hauteur-sol (Hs) avant décollage dudit aéronef (30), et
- au moins une itération de réglage (160) comprenant les étapes suivantes :
• deuxième détermination (162) d'une deuxième valeur de ladite hauteur-sol (Hs) après décollage dudit aéronef (30),
• comparaison (165) de ladite première valeur et de ladite deuxième valeur de ladite hauteur-sol (Hs),
• si une différence entre ladite deuxième valeur et de ladite première valeur est inférieure ou égale à un écart prédéterminé, nouvelle connexion (168) audit organe de traitement (80) d'un élément rayonnant (11-19) supplémentaire parmi lesdits éléments rayonnants (11-19), puis
- réalisation d'une nouvelle itération de réglage (160).

9. Procédé selon la revendication 8,
dans lequel ladite deuxième détermination (162) de ladite deuxième valeur de ladite hauteur-sol (Hs) est effectuée sur commande à l'aide d'une interface homme-machine (7) ou automatiquement dès que ledit aéronef (30) s'est élevé d'une hauteur courante supérieure ou égale à une hauteur prédéterminée, ladite hauteur courante étant déterminée à l'aide d'un altimètre (6) dudit aéronef (30).

10. Procédé selon l'une quelconque des revendications 1 à 8,
dans lequel ledit procédé comporte une détermination (180) d'un angle d'inclinaison maximale dudit aéronef (30) pour lequel ladite détermination (300) de ladite hauteur sol (Hs) est considérée correcte, ledit angle d'inclinaison maximale étant fonction d'un nombre desdits éléments rayonnants (11-19) connectés électriquement audit organe de traitement (80), et un affichage (185) dudit angle d'inclinaison maximale sur un afficheur (9) dudit aéronef (30).

11. Procédé selon l'une quelconque des revendications 1 à 10,
dans lequel ledit réglage (100) dudit angle d'ouverture comporte une commande (110) d'au moins un connecteur (41-49) parmi des connecteurs (41-49) reliant électriquement ledit organe de traitement (80) respectivement auxdits éléments rayonnants (11-19) à l'aide d'une interface homme-machine (7).

12. Procédé selon l'une quelconque des revendications 1 à 11,
dans lequel lesdits éléments rayonnants (11-19) sont disposés selon une unique rangée (31).

13. Procédé selon l'une quelconque des revendications 1 à 12,
dans lequel lesdits éléments rayonnants (11-19) sont disposés respectivement selon au moins deux rangées (32-34).

14. Procédé selon l'une quelconque des revendications 1 à 13,
dans lequel une longueur (D) dudit interstice séparant deux éléments rayonnants (11-19) adjacents est proportionnelle à une longueur d'onde dudit signal électromagnétique primaire (51) émis par ladite source (5).

15. Radioaltimètre (1) pour aéronef (1), ledit radioaltimètre (1) comportant une antenne émettrice (10) munie d'une source (5) générant un signal électromagnétique primaire (51,52), une antenne réceptrice (20) munie d'un récepteur (25) apte à recevoir un signal électromagnétique réfléchi (55,56) résultant d'une réflexion dudit signal électromagnétique primaire (51), et un calculateur (2), ledit calculateur (2) déterminant ladite hauteur-sol (Hs) dudit aéronef (30) à partir de données (18) fournies par ladite antenne émettrice (10) et ladite antenne réceptrice (20),
**caractérisé en ce que** ledit radioaltimètre (1) comporte une antenne réglable parmi ladite antenne émettrice (10) et ladite antenne réceptrice (20), ladite antenne réglable étant munie d'au moins deux éléments rayonnants (11-19), d'un organe de traitement (80) et d'une pluralité de connecteurs (41-45) permettant de relier respectivement lesdits éléments rayonnants (11-19) électriquement audit organe de traitement (80), deux éléments rayonnants (11-19) adjacents étant séparés par un interstice (D) non nul, ledit organe de traitement (80) comportant ladite source (5) lorsque ladite antenne réglable est ladite antenne émettrice (10) ou ledit récepteur (25) lorsque ladite antenne réglable est ladite antenne réceptrice (20), ledit radioaltimètre (1) étant configuré pour la mise en oeuvre du procédé selon l'une quelconque des revendications 1 à 14.

16. Aéronef (1) équipé d'un radioaltimètre (1) selon la revendication 15.
